## Europäisches Patentamt

## European Patent Office

## Office européen des brevets

(19)

(11) Publication number: **0 388 224**
A2

(12)

# EUROPEAN PATENT APPLICATION

(21) Application number: **90302842.1**

(22) Date of filing: **16.03.90**

(51) Int. Cl.5: **G01N 33/68, G01N 35/02**

(30) Priority: **17.03.89 JP 66842/89**
**13.06.89 JP 150801/89**
**13.06.89 JP 150803/89**
**13.06.89 JP 150804/89**
**16.06.89 JP 155223/89**
**19.06.89 JP 158037/89**
**18.08.89 JP 213184/89**
**18.08.89 JP 213185/89**
**18.08.89 JP 213186/89**
**18.08.89 JP 213187/89**
**18.08.89 JP 213188/89**
**18.08.89 JP 213189/89**
**18.08.89 JP 213190/89**
**18.08.89 JP 213191/89**

(43) Date of publication of application:
**19.09.90 Bulletin 90/38**

(84) Designated Contracting States:
**CH DE FR GB LI**

(71) Applicant: **SEIKO INSTRUMENTS INC.**
**31-1, Kameido 6-chome Koto-ku**
**Tokyo 136(JP)**

(72) Inventor: **Uchida, Toyoaki, c/o SEIKO**
**INSTRUMENTS INC.**
**31-1, Kameido, 6-chome, Koto-ku**
**Tokyo(JP)**
Inventor: **Tsugita, Akira, c/o SEIKO**
**INSTRUMENTS INC.**
**31-1, Kameido, 6-chome, Koto-ku**

**Tokyo(JP)**
Inventor: **Sakuhara, Toshihiko, c/o SEIKO**
**INSTRUMENTS INC.**
**31-1, Kameido, 6-chome, Koto-ku**
**Tokyo(JP)**
Inventor: **Takahashi, Seitaro, c/o SEIKO**
**INSTRUMENTS INC.**
**31-1, Kameido, 6-chome, Koto-ku**
**Tokyo(JP)**
Inventor: **Yoshida, Hitoshi, c/o SEIKO**
**INSTRUMENTS INC.**
**31-1, Kameido, 6-chome, Koto-ku**
**Tokyo(JP)**
Inventor: **Kobayashi, Kiyoshi, c/o SEIKO**
**INSTRUMENTS INC.**
**31-1, Kameido, 6-chome, Koto-ku**
**Tokyo(JP)**
Inventor: **Yagi, Shigeki, c/o SEIKO**
**INSTRUMENTS INC.**
**31-1, Kameido, 6-chome, Koto-ku**
**Tokyo(JP)**
Inventor: **Nomoto, Yasuhiro, c/o SEIKO**
**INSTRUMENTS INC.**
**31-1, Kameido, 6-chome, Koto-ku**
**Tokyo(JP)**

(74) Representative: **Miller, Joseph et al**
**J. MILLER & CO. Lincoln House 296-302 High**
**Holborn**
**London WC1V 7JH(GB)**

(54) Method and apparatus for effecting chemical treatment.

(57) An apparatus for effecting chemical treatment of a solid sample comprising treatment means (2,4,5) for causing a reactive gas phase fluid to react with a solid sample so as to effect a solid phase/gas phase reaction to produce a resultant substance characterized in that the treatment means (2,4,5) comprises means (4,5) for producing a flow of an extractive fluid through the so-treated sample so as to effect extraction of the said resultant substance, there being transfer means (1,3) for transferring the solid sample through the treatment means (2,4,5).

# FIG. 1

```
┌─────────────────┐ ╱1
│  TRANSFER UNIT  │
└─────────────────┘
        ↓
┌─────────────────┐ ╱2
│  REACTION UNIT  │ ←──────────────────────┐
└─────────────────┘                         │
        ↓                                    │
┌─────────────────┐ ╱3                       │
│  TRANSFER UNIT  │            ┌─────────────────────────────┐ ╱5
└─────────────────┘            │  SOLUTION DELIVERY   UNIT   │
        ↓                      └─────────────────────────────┘
┌─────────────────┐ ╱4                       │
│ EXTRACTION AND  │ ←──────────────────────┘
│ DISCHARGE UNIT  │
└─────────────────┘
        ↓
┌─────────────────┐
│   AMINO ACID    │
│    ANALYZER     │
└─────────────────┘
```

## METHOD AND APPARATUS FOR EFFECTING CHEMICAL TREATMENT

The present invention relates to a method and apparatus for effecting chemical treatment and, although it is not so restricted, it relates more particularly to a method and apparatus for carrying out hydrolysis of protein or peptide for use in the first step of an amino acid composition analysis of the protein or peptide.

Amino acid composition analysis has been carried out, for example, as disclosed in S. Moore, H. Stein, "Methods in Enzymology" edited by S.P. Colowick, N.O. Kaplan, 1963 Vol 6, pp819-831, Academic Press New York. Namely, at first, constant boiling hydrochloric acid is added to a dried sample placed in the bottom of a glass tube. Then, the glass tube is sealed under reduced pressure while being cooled with ice. Next, the thus formed ampule is heated at 105 - 110°C for 24 - 144 hours. Then, the ampule is opened, and the hydrochloric acid is evaporated and removed. Lastly, the hydrolyzed sample is dissolved and injected into an amino acid analyzer.

Recently, there has been developed a fast gas phase hydrolysis method by Tsugita et al. (Tsugita et al. Journal of Biochemistry, 1987, Vol.102, pp1593-1597). This method has been proposed in order to improve the hydrolysis operation for use in the first step of the composition analysis as follows:

1. The hydrolysis reaction can be quickly completed in a period of 22.5 - 45 minutes at a reaction temperature of 158°C so as to increase the hydrolysis speed.

2. Trifluoroacetic acid, which is a volatile and strong organic acid, is added to increase the hydrolysis rate of hydrophobic protein.

3. Acid vapour is applied to the protein sample to effect gas phase reaction so as to avoid contamination of amino acid contained in the acid solution itself to enable accurate amino acid composition analysis to be effected while facilitating the removal of the remaining acid after the hydrolysis. This method is disclosed in Japanese Patent Application Laid-Open No. 151157/1986.

The known hydrolysis method utilizing constant boiling hydrochloric acid requires a long reaction time of the order of 24 - 144 hours, and a complicated evaporation process is needed after the hydrolysis to remove the acid. Further, in view of the liquid phase reaction process, contamination is caused by virtue of the fact that the acid solution makes an accurate composition analysis difficult to effect. This is particularly so when carrying out micro scale analysis.

With regard to the gas phase reaction method developed by Tsugita et al., a highly skilled technique is needed for use in a glass works. Further, the drawback of contamination remains due to the fact that an operator treats the sample.

According to the present invention, there is provided an apparatus for effecting chemical treatment of a solid sample comprising treatment means for causing a reactive gas phase fluid to react with a solid sample so as to effect a solid phase/gas phase reaction to produce a resultant substance characterized in that the treatment means comprises means for producing a flow of an extractive fluid through the so-treated sample so as to effect extraction of the said resultant substance, there being transfer means for transferring the solid sample through the treatment means.

By using an apparatus according to the present invention the drawbacks of the prior art can be avoided since each step from an hydrolysis step of a dried protein sample to an injection of the hydrolyzed substance into an amino acid analyzer can be carried out without any manipulation by an operator, and a plurality of samples can be continuously processed.

Preferably, the apparatus comprises a sample carrier for carrying the solid sample, the transfer means transferring the sample carrier through the treatment means.

There may be means for depositing liquid containing the sample on or in the sample carrier and drying means for drying the said liquid, the transfer means transferring the sample carrier from the drying means to the treatment means.

The treatment means preferably comprises a reaction unit in which the said reaction is effected; an extraction unit in which the said extraction is effected; and a delivery unit for delivering the reactive gas phase fluid and the extractive fluid to the reaction unit and to the extraction unit respectively.

Means are preferably provided for effecting the said reaction under heat and pressure.

Control means may be provided to effect sequential operation of a plurality of process steps carried out in the apparatus.

In one preferred form, the sample carrier includes a substrate for carrying therein a dried sample of protein or peptide, and the reaction unit includes introducing means for introducing an acid-containing gas into the sample carrier to react with the dried sample of protein or peptide to thereby hydrolyze the sample to amino acid components. Further, in the said preferred form, the extraction unit includes means for causing a solvent to flow through the sample carrier to extract the amino acids in the form of a sample

EP 0 388 224 A2

solution and for discharging the sample solution to an amino acid analyzer to enable amino acid analysis of the sample composition of protein or peptide to be effected. Moreover, a control unit is provided for controlling the various units cooperatively with each other to effect sequential hydrolysis and analysis of the sample protein or peptide.

In another preferred form, the reaction unit includes heating means for heating an acid-containing solution delivered from the delivering unit at a temperature of at least $100\degree$ C to convert the acid-containing solution into pressurized acid-containing gas during a reaction time interval of at least 5 minutes. In this preferred form, a delivery unit is employed which includes means for delivering an acid-containing solution containing trifluoroacetic acid and hydrochloric acid. The apparatus further includes a drying unit operative when an empty sample carrier is loaded in the drying unit for supplying thereto a solution containing a sample to impregnate the same in the sample carrier and for drying the impregnated sample. In addition, the sample carrier is comprised of an outer shell and an inner substrate for carrying the sample while passing the reactive gas phase fluid.

In an automatic hydrolysis apparatus constructed as above, for the amino acid composition analysis of protein or peptide supported on a sample carrier, the process is carried out in a series of steps including the transfer of the sample carrier, the hydrolysis by solid phase/gas phase reaction, the extraction, and the injection into the amino acid analyzer without any manual operation or treatment so as to avoid possible contamination and differences between individuals, thereby achieving accurate amino acid composition analysis and saving the labour of an operator. Further, a plurality of the sample carriers can be continuously treated and the sequential operations can be carried out continuously.

A sample carrier may comprise a support for carrying the sample, the support being disposed in an outer shell. Thus the outer shell may comprise a cylindrical tube having at least one outer annular recess to assist positioning of the sample carrier. Moreover, the support may comprise a glass filter, a glass tube being disposed between the support and the outer shell. The outer shell may be made of a fused layer of glass, and the fused layer of glass may be impregnated with glass adhesive to harden it.

In one embodiment, the outer shell comprises a cylindrical tube having at each of its opposite end portions a peripheral outer annular recess for the positioning of the sample carrier in the units.

In another embodiment, the outer shell comprises a cylindrical tube having at its central portion a peripheral outer annular recess for guiding the sample carrier during the transferring thereof.

In yet another embodiment, the outer shell comprises a metal tube, and an inner support which comprises a glass filter and a glass tube for receiving therein the glass filter, the glass tube being disposed inside the metal tube.

The inner support may be composed of glass material selected from glass fibre material, glass beads and porous glass.

A loading unit may be provided for loading the sample carriers one by one into the transfer means.

The loading unit may have a slanting tray for aligning the sample carriers thereon; and first and second means arranged successively on the tray for retaining and releasing each sample carrier at successive waiting and pick-up positions.

Thus the loading unit may be arranged to pick up each sample carrier and to transfer the picked-up sample carrier to the reaction unit.

The said first means may be disposed at a downward portion of the slanting tray for temporarily holding a sample carrier next to a target sample carrier at the waiting position, and the said second means may be disposed at a downmost portion of the slanting tray for placing the target sample carrier at the pick-up position in spaced relationship with the next sample carrier so as to enable the transfer unit to pick up the target sample carrier.

The reaction unit may comprise a pair of boxes movable relative to and from each other to close and open the reaction unit to thereby enable loading and unloading of the sample carrier by means of the transfer unit.

The reaction unit may include a sealer effective to seal the reaction unit when closed to thereby avoid the reactive gas phase fluid from leaking outside the closed reaction chamber, there being a vaporizing chamber receptive of a reactive liquid phase fluid from the feeding unit and connected to the loaded sample carrier, and a heater for heating the vaporizing chamber to enable the same to vaporize the reactive liquid phase fluid into pressurized reactive gas phase fluid.

A cooling unit may be provided for cooling a sample carrier which has been heated in the reaction unit.

The cooling unit may comprise a pair of container members which are movable towards and away from each other to enable a sample carrier to be introduced between them and withdrawn therefrom, each container member having a flow path therein for the passage of a coolant therethrough.

The extraction unit may comprise a pair of nozzles movable relatively to each other, for fixing and

4

releasing therebetween a sample carrier so that the extractive fluid may be passed through the sample carrier when so fixed.

The extraction unit may include means for replacing a sample carrier by a dummy carrier after the removal of the sample carrier so that the nozzles fix the dummy carrier therebetween to permit a flow of washing fluid to be passed therethrough from a feeding unit to wash the nozzles.

The transfer means may comprise a gripper for gripping a sample carrier; an arm for supporting the gripper; and movement effecting means for moving the arm to effect transfer of the sample carrier.

The movement effecting means may be arranged to displace the arm vertically along vertically arranged units to effect transfer of the sample carrier therebetween.

There may be a recovery unit adjacent to the extraction unit for storing an extracted sample carrier which is moved thereto by means of the transfer unit.

The invention also comprises a method of effecting chemical treatment of a solid sample comprising causing a reactive gas phase fluid to react with a solid sample in a reaction zone so as to effect a solid phase/gas phase reaction to produce a resultant substance characterised in that a flow of an extractive fluid is passed through the so-treated sample so as to effect extraction of the said resultant substance, the solid sample being transferred by transfer means through the reaction zone.

The sample is preferably a sample of protein or peptide which is reacted with an acid-containing gas to effect hydrolysis of the sample to amino acid.

The said acid-containing gas may be produced by heating an acid-containing solution to a temperature of at least $100°$ C, the said gas being used in the said reaction for a period of at least 5 minutes.

The acid-containing solution may contain trifluoroacetic acid and hydrochloric acid.

Prior to the said hydrolysis, an inert gas may be employed to purge oxygen from the sample.

After the hydrolysis, steam may be employed to remove any remaining acid-containing gas.

The invention is illustrated, merely by way of example, in the accompanying drawings, in which:-

Figure 1 is a schematic block diagram showing part of one embodiment of an automatic hydrolysis apparatus according to the present invention;

Figure 2 is a sectional view of a sample carrier which may be used in the Figure 1 embodiment;

Figure 3 is an illustrative diagram or sequence chart, showing the operation sequence of the Figure 1 embodiment;

Figure 4A is an illustrative perspective view of a hydrolysis unit which may be used in the Figure 1 embodiment;

Figure 4B is a sectional view of the Figure 4A hydrolysis unit;

Figure 4C is a sectional view of a vaporizing chamber provided in the Figure 4B hydrolysis unit;

Figure 5 is an illustrative perspective view of an extraction unit which may be used in the Figure 1 embodiment;

Figures 6A - 6D are side views of a transfer unit which may be used in the Figure 1 embodiment, Figures 6A - 6D illustrating successive stages in the transfer of the sample carrier;

Figure 7 is a sectional view of a first modification of the Figure 2 sample carrier;

Figure 8 is an illustrative view showing the sample carrier of Figure 7 loaded in an hydrolysis unit;

Figure 9 is a sectional view of a second modification of the Figure 2 sample carrier;

Figure 10 is a sectional view of a third modification of the Figure 2 sample carrier;

Figure 11 is a sectional view showing a fourth modification of the Figure 2 sample carrier;

Figure 12 is a sectional view showing a fifth modification of the Figure 2 sample carrier;

Figure 13 is an illustrative view illustrating the transfer of the Figure 12 sample carrier in the Figure 1 embodiment;

Figure 14 is a schematic block diagram showing a second embodiment of an automatic hydrolysis apparatus according to the present invention;

Figure 15A is a general structural front view of the Figure 14 embodiment;

Figure 15B is a general structural side view of the Figure 14 embodiment;

Figure 16 is a sectional view of a sample carrier which may be used in the Figure 14 embodiment;

Figure 17 is a schematic flow pass diagram of the Figure 14 embodiment;

Figure 18 is a side view of a loading unit which may be used in the Figure 14 embodiment;

Figure 19 is an illustrative diagram of a reaction unit which may be used in the Figure 14 embodiment;

Figure 20 is an illustrative diagram of another hydrolysis unit which may be used in the Figure 14 embodiment;

Figure 21 is an illustrative diagram of a simplified hydrolysis unit;

Figure 22 is an illustrative side view of a cooling unit which may be used in the Figure 14 embodiment;

Figure 23 is an illustrative side view of an extraction unit which may be used in the Figure 14 embodiment;

Figures 24A and 24B illustrate the operation of the Figure 23 extraction unit;

Figure 25 is a general side view of a transfer unit which may be used in the Figure 14 embodiment;

Figure 26 is a step chart showing sequential operation of the Figure 25 transfer unit; and

Figure 27 is an schematic block diagram of a third embodiment of an automatic hydrolysis apparatus in accordance with the present invention in combination with an amino acid and analysis apparatus.

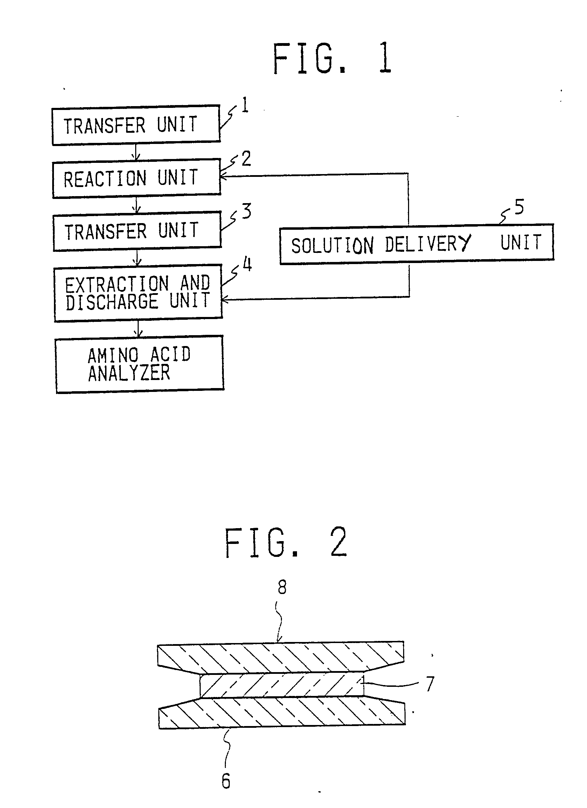

Figure 1 is a block diagram showing part of a first embodiment of an automatic hydrolysis apparatus according to the present invention for effecting hydrolysis of protein or peptide. The apparatus of Figure 1 comprises a transfer unit 1 for transferring a sample carrier (not shown) in Figure 1 which supports a solid dried sample of protein or peptide; a reaction unit 2, operative when the sample carrier is loaded therein, for conducting an hydrolysis reaction between the dried sample and an acid-containing gas, and thus for reacting a reactive gas phase fluid with the solid sample under the application of heat and pressure so as to undertake solid phase/gas phase reaction to produce a resulting substance in the sample carrier; another transfer unit 3 for transferring the sample carrier which supports the hydrolyzed sample; an extraction and discharge unit 4, operative when the sample carrier carrying the hydrolyzed sample has been loaded therein, for producing a flow through the loaded sample carrier of an extractive fluid effective to extract the resultant substance, e.g. for extracting the hydrolyzed sample from the sample carrier and for injecting the extracted sample solution into an amino acid analyzer; and a solution delivery unit 5 for delivering solutions to the extraction and injection unit 4 and to the reaction unit 2 to enable the units 2, 4 to effect chemical treatment of the sample. The sample of protein or peptide is hydrolyzed to amino acid through the use of the units 1 - 4, and is then directly injected into or is delivered to the amino aid analyzer.

Next, the operation of the apparatus for effecting hydrolysis of protein or peptide will now be described.

As shown in Figure 2, the sample carrier used in the Figure 1 embodiment may comprise a sample carrier or sample holder 8. The latter comprises a glass filter 7 composed of porous glass, the glass filter 7 being inserted into an outer cylindrical shell 6 for carrying the sample. The glass filter 7 functions as a support or substrate for the sample.

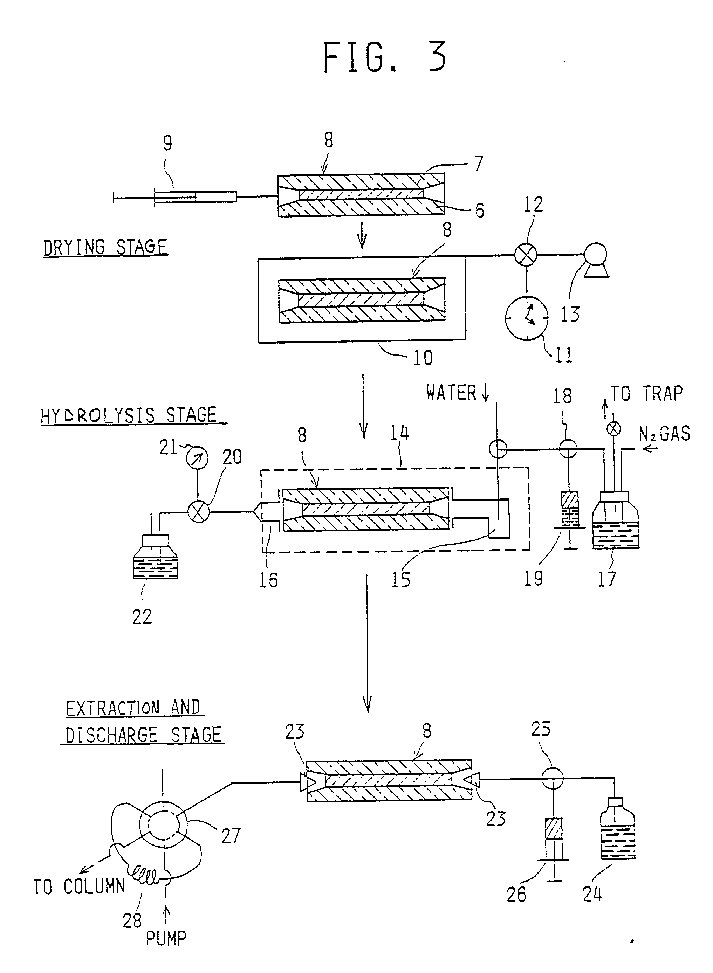

As illustrated, in Figure 3, a sample solution is first dried. Namely, the sample solution is impregnated into the glass filter 7 of the sample holder 8 by a microsyringe 9. Next, the sample holder 8 is placed in a vacuum box 10. The vacuum box 10 is connected to a vacuum pump 13 through an electromagnetic valve 12 provided with a timer 11. The latter operates in accordance with a time program for opening and closing the electromagnetic valve 12 so as to automatically and intermittently carry out a vacuum process in which solvent in the sample solution is removed to thereby dry the sample. The dried sample is supported in the glass filter 7 of the sample holder 8.

Next, the sample holder 8 is transferred to an hydrolysis stage. In this stage, the sample holder 8 is fixed to a vaporizing chamber 15 within a furnace 14 and is also fixed to a glass outlet tube 16. After purging oxygen from an acid-containing solution 17 by means of an inert gas, the solution 17 is sucked up by a syringe pump 19 through a three-way valve 18. Then, the three-way valve 18 is switched to feed the acid-containing solution to the vaporizing chamber 15. Since the vaporizing chamber 15 and the sample holder 8 are heated by the furnace 14, the acid is converted into a vapour within the chamber 15 so that the vaporized acid fills a space around the sample holder 8. At this time, an electromagnetic valve 20 may be closed, or may be switched between closing and opening states according to a pressure gauge 21 so as to maintain a constant pressure within the sample holder 8. Thus, the sample supported in the sample holder 8 is hydrolyzed by the acid-containing gas due to solid phase/gas phase reaction. Then, the electromagnetic valve 20 is opened, and water vapour or steam is introduced into the sample holder 8 to remove the remaining acid-containing gas. The removed acid-containing gas passes through the electromagnetic valve 20 and is collected by a trap 22.

Next, the sample holder 8 is transferred to another stage for extraction and injection. In this stage, the sample holder 8 is fixed and connected to a pair of nozzles 23. Diluted hydrochloric acid is sucked from within a syringe 26 through a three-way valve 25. The three-way valve 25 is switched to feed the diluted hydrochloric acid 24 to extract the hydrolyzed sample from the sample holder 8. A solution in which the extracted sample is dissolved is discharged into a sample coil 28 within a six-way valve 27 which constitute an injection device of an amino acid analyzer. After these operations, the amino acid analysis is undertaken in known manner. Various conditions of this embodiment are listed in the following Table.

TABLE

| Temperature of the furnace | 158°C | |
|---|---|---|
| Composition of the acid-containing solution. | Hydrochloric acid Phenol Trifluoroacetic acid | 7M 0.1% 10% |
| Concentration of diluted hydrochloric acid. Capacity of the sample holder. Volume of the sample solution | 0.01M 130μℓ 100μℓ | |

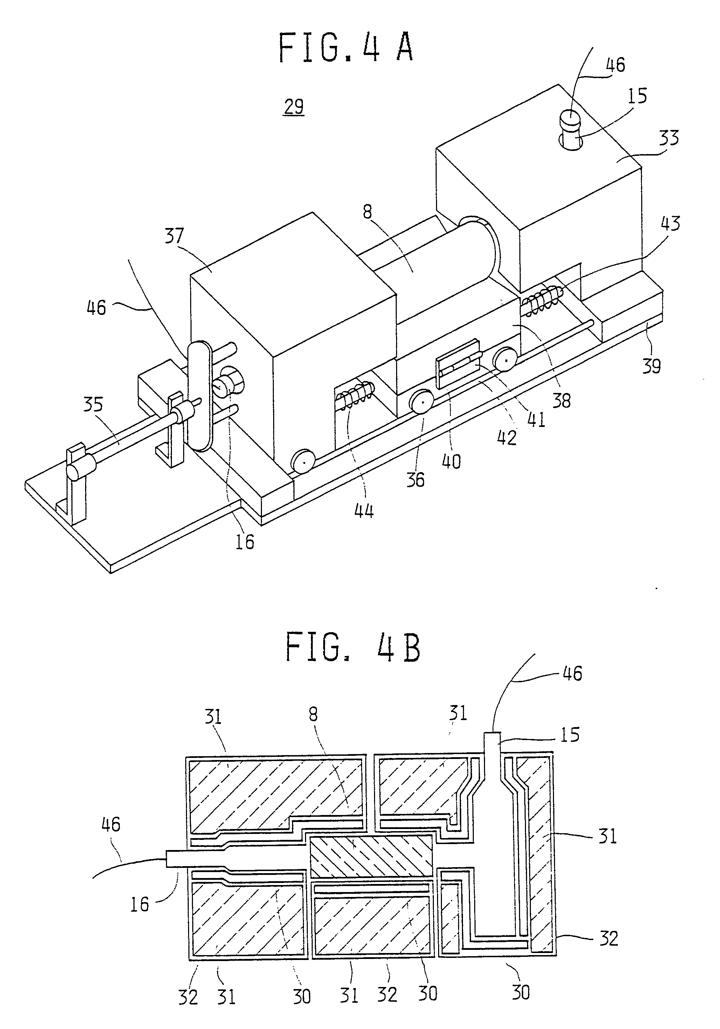

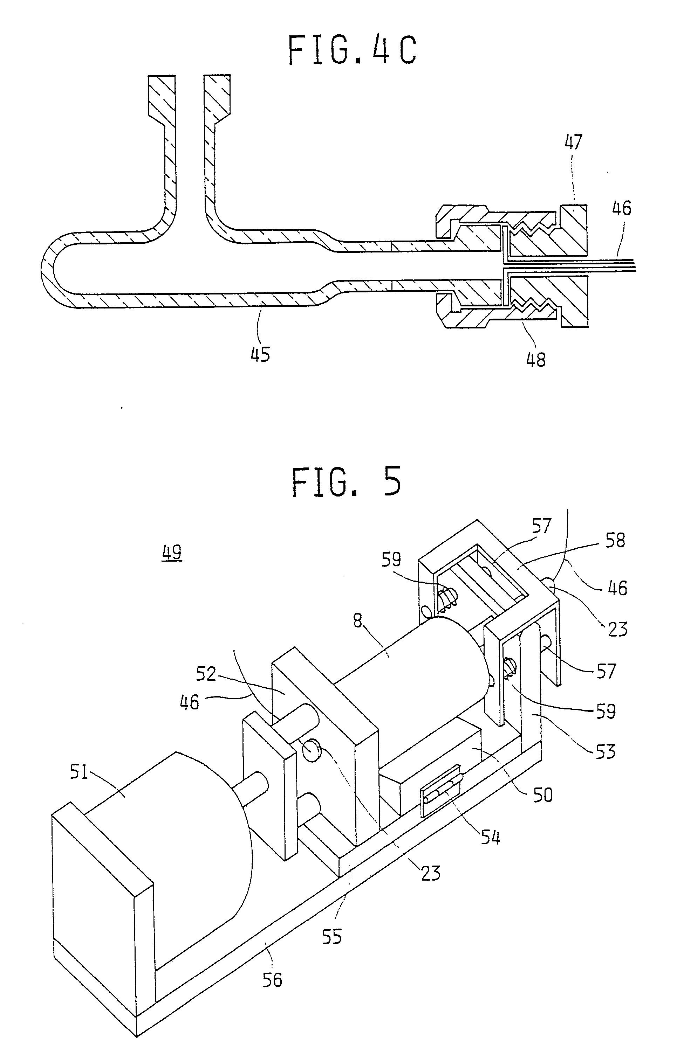

Next, the hydrolysis stage or hydrolysis unit 29 is described in detail. Figure 4A is an illustrative and perspective view showing one embodiment of an hydrolysis unit which may be used in an apparatus according to the present invention and in which a sample holder is loaded but exposed, Figure 4B is a sectional view of the Figure 4A hydrolysis unit in which the sample holder is loaded and enclosed, and Figure 4C is a sectional view showing a vaporizing chamber provided in the Figure 4A hydrolysis unit. Referring to these Figures, the hydrolysis unit 29 is comprised of a stationary heating sub unit 33 which comprises a vaporizing chamber 15, a rubber heater 30 therefor, a thermal insulator 31 of this rubber heater 30, a cover 32, a movable heating sub unit 37 having a glass outlet tube 16 provided with another rubber heater 30, another thermal insulator 31 for the last-mentioned rubber heater 30, another cover 32, an air cylinder 35 and rollers 36, and a mounting sub unit 38 comprising another rubber heater 30, another thermal insulator 31, another cover 32 and other rollers 36. These sub units are arranged on a base 39.

The mounting sub unit 38 is carried on a carriage 40 provided with the rollers 36, the mounting sub-unit 38 being connected to the carriage 40 through a hinge 41. The movable heating sub unit 37 and the carriage 40 are disposed on rails 42 by means of the rollers 36 so as to selectively effect fixing (Figure 4B) and releasing (Figure 4A) of the sample holder 8 by means of the air cylinder 35. A guide bar 43 extending through the carriage 40 and a spring 44 are provided to position the mounting sub unit 38 in place when releasing the sample holder 8. As shown in Figure 4C, the vaporizing chamber 15 comprises a Pyrex (Registered Trade Mark) glass tube 45 having a branch, and a Teflon (Registered Trade Mark) tube 46 which is connected to the glass tube 45 by means of a bolt 47 and a blind nut 48 at a flange portion of the tube 46. The acid-containing solution from the syringe pump 19 is fed to the vaporizing chamber 15 through the Teflon tube 46.

Figure 5 is a perspective view showing one example of the construction of an extraction and discharge stage or unit 49 which may be used in an apparatus according to the present invention. As shown in Figure 5, the sample holder 8 is mounted on a table plate 50 and is fixed by a pair of inlet and outlet nozzles 23. One of the nozzles 23 is inserted into a movable nozzle-support plate 52 and the other nozzle 23 is inserted into a stationary nozzle-support plate 53. The unit 49 also employs an air cylinder 51. The table plate 50 is coupled to a spacer 55 through a hinge 54. The stationary nozzle-support plate 53 and the spacer 55 are fixed on a base 56 as shown in Figure 5. A pair of guide bars 57 pass through the stationary nozzle-support plate 53. A release member 58 is fixed to the guide bars 57 at both ends thereof. A pair of springs 59 are disposed around the respective guide bars 57 between one side of the release member 58 adjacent to the sample holder 8 and the stationary nozzle-support plate 53 so as to provide drive force when releasing the sample holder 8.

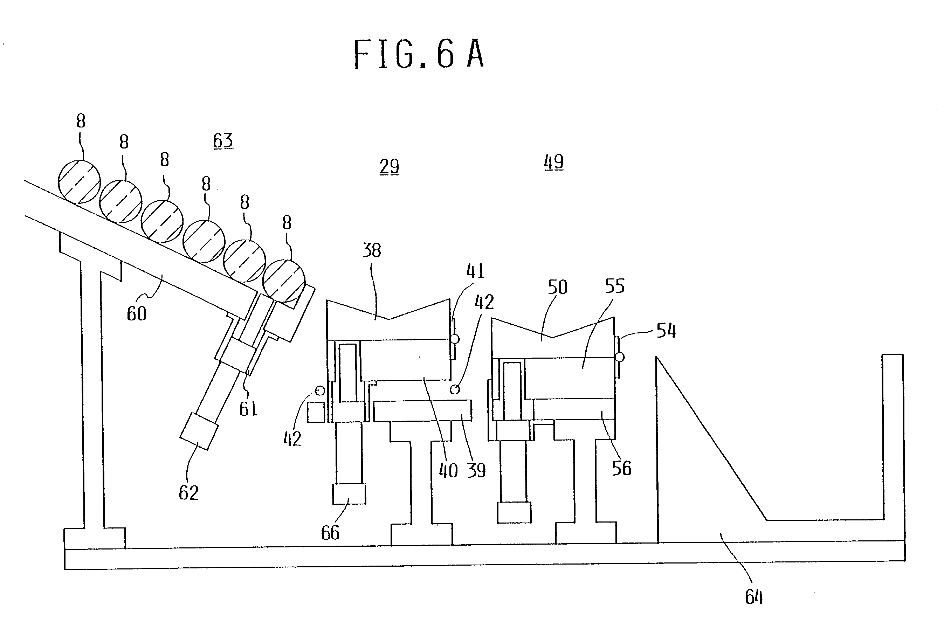

Figures 6A - 6D are side views illustrating the operation of a transfer unit for the sample holder which may be used in an apparatus according to the present invention. The transfer unit comprises an auto-holder-loader 63, which comprises a tray 60 and an air cylinder 62 fixed to the tray 60 through a retainer 61. The hydrolysis apparatus is constructed, for example, so that the auto-holder-loader 63, the hydrolysis unit 29, the extraction and injection unit 49 and a storage case 64 are arranged successively of each other. The auto-holder-loader 63 mounts on its tray 60 a plurality of sample holders 8 each of which carries a dried sample excluding solvent (Figure 6A).

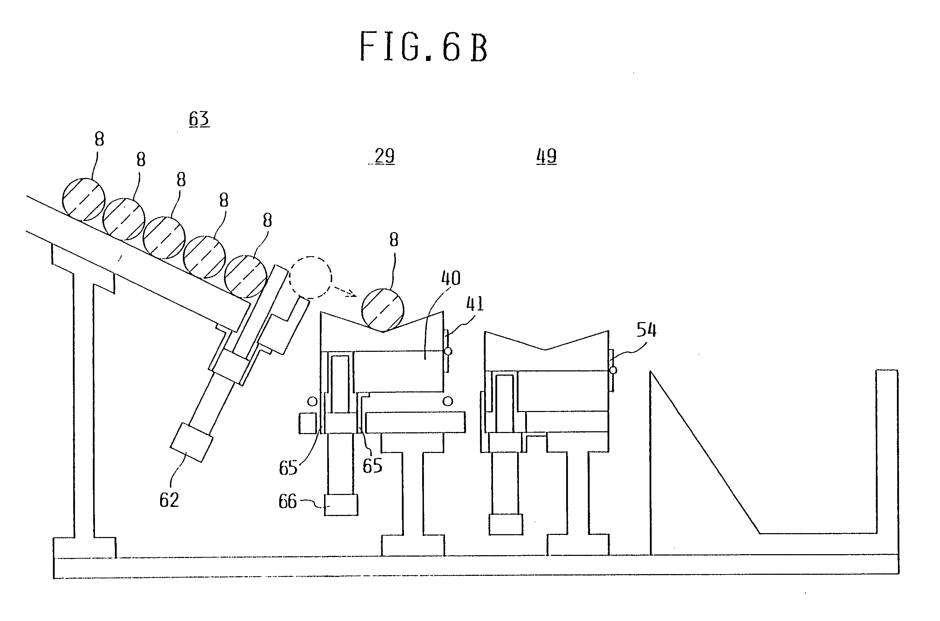

Next, an individual sample holder 8 is transferred by means of the air cylinder 62 from the tray 60 to the hydrolysis unit 29 (Figure 6B). The sample holder 8 receives the hydrolysis treatment in the hydrolysis unit 29.

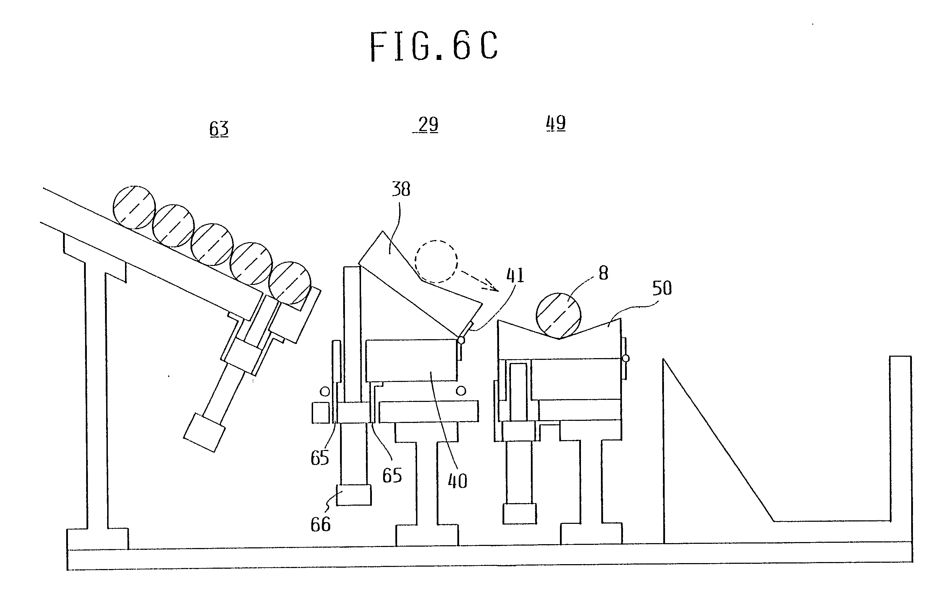

The sample holder 8 is then transferred to the table plate 50 of the extraction and injection unit 49 by tilting the mounting sub unit 38 through the hinge 41 with the aid of an air cylinder 66 (Figure 6C).

After the extraction and injection treatment, the empty sample holder 8 is stored in the storage case 64

EP 0 388 224 A2

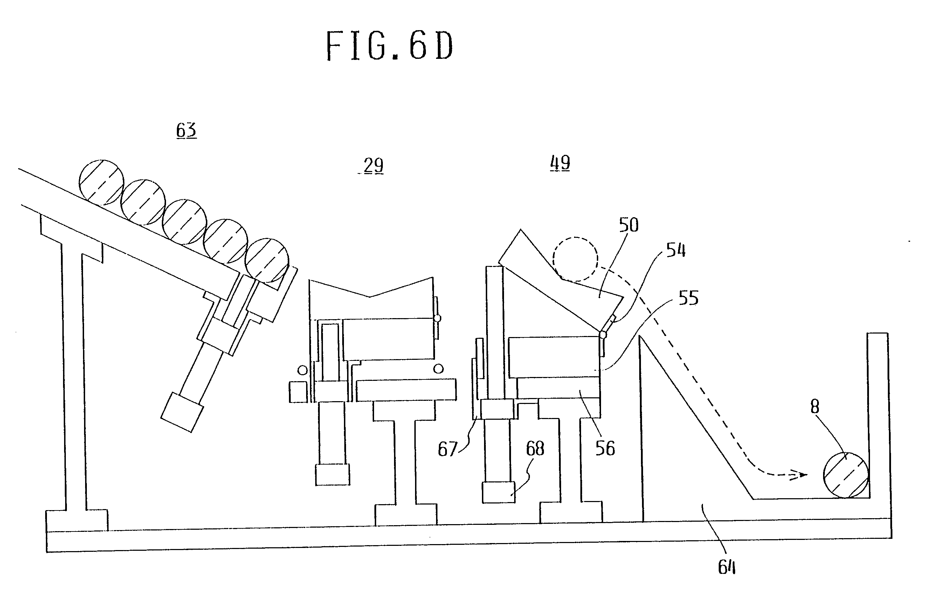

by tilting the table plate 50 coupled through the hinge 54 to the spacer 55 as a result of the operation of an air cylinder 68, the latter being fixed through a retainer 67 to the spacer 55 and base 56 (Figure 6D).

The sample holder or sample carrier 8 is automatically transferred to continuously carry out the steps of an hydrolysis based on a solid phase/gas phase reaction and the extraction and injection into an amino acid analyzer in a process of amino acid composition analysis of protein or peptide without using any manual operations.

The material of the sample carrier 8 must be composed of material which does not react with the sample solution or hydrochloric acid solution used for the hydrolysis or extraction, and must be constructed to hold these solutions. Therefore, the substrate may be composed of glass fibre, porous glass or packed beads of glass or ceramics.

As described above, in the first embodiment of the present invention, the sequential treatments from the hydrolysis of the sample by gas phase reaction method to the injection of the resulting substance to an amino aid analyzer can be continuously carried out in the amino aid composition analysis of protein or peptide without using manual operation, and a plurality of the samples can be continuously treated. Therefore, skilled manipulations and individual differences of the operators can be eliminated to enable accurate amino acid composition analysis to be performed and to save labour of the operator.

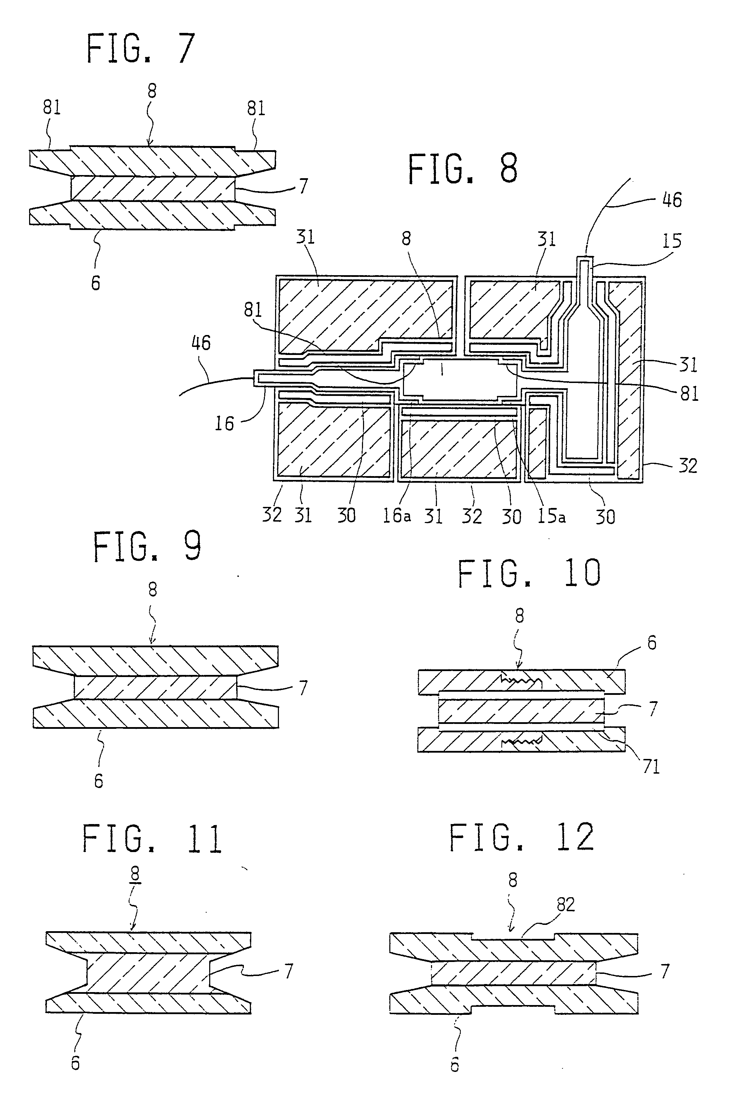

Figure 7 is a sectional view showing a first modification of the Figure 2 sample carrier 8. The sample carrier 8 comprises an outer cylindrical glass tube 6 and an inner support 7 of glass filter for carrying the sample disposed inside the outer glass tube 6. The outer cylindrical glass tube 6 is formed at its opposite end portions with a pair of peripheral outer annular recesses or reduced diameter portions 81 effective to position the sample carrier 8 in the various units. For example, as shown in Figure 8, when the sample carrier 8 is loaded into the hydrolysis unit, the sample carrier 8 is supported through the pair of outer annular recesses 81, one of which is fitted into a flange 15a formed at an end portion of a branch of the varorizing chamber 15, and the other of which is fitted into a flange 16a of the outlet glass tube 16.

Figure 9 is a sectional view showing a second modification of the Figure 2 sample carrier 8. The sample carrier 8 of Figure 9 comprises glass filter material shaped in a cylindrical form. The outer layer of the cylindrical glass filter material is impregnated with a glass adhesive to constitute an outer shell 6, and the remaining inner portion constitutes a substrate 7 for carrying therein a sample.

Figure 10 is a sectional view showing a third modification of the Figure 2 sample carrier 8. The sample carrier 8 of Figure 10 comprises an outer shell 8 made of metal tube and an inner substrate 7. The inner substrate 7 is comprised of a core glass filter and a glass tube 71 which encloses the core glass filter and which is disposed inside the outer metal tube 8. The outer metal tube 8 has a mechanical strength greater than an outer glass tube. The outer metal tube 8 may be coated with Teflon (Registered Trade Mark).

Figure 11 is a sectional view showing a fourth modification of the Figure 2 sample carrier 8. The sample carrier 8 of Figure 11 comprises a core inner substrate 7 composed of glass material selected from glass fibre, glass beads and porous glass. The outer shell 8 is composed of a fused layer of the same glass material as the core inner substrate 7. In making the sample carrier, the glass material is moulded in a cylindrical shape and then is heated to fuse only an outer layer of the moulded glass material.

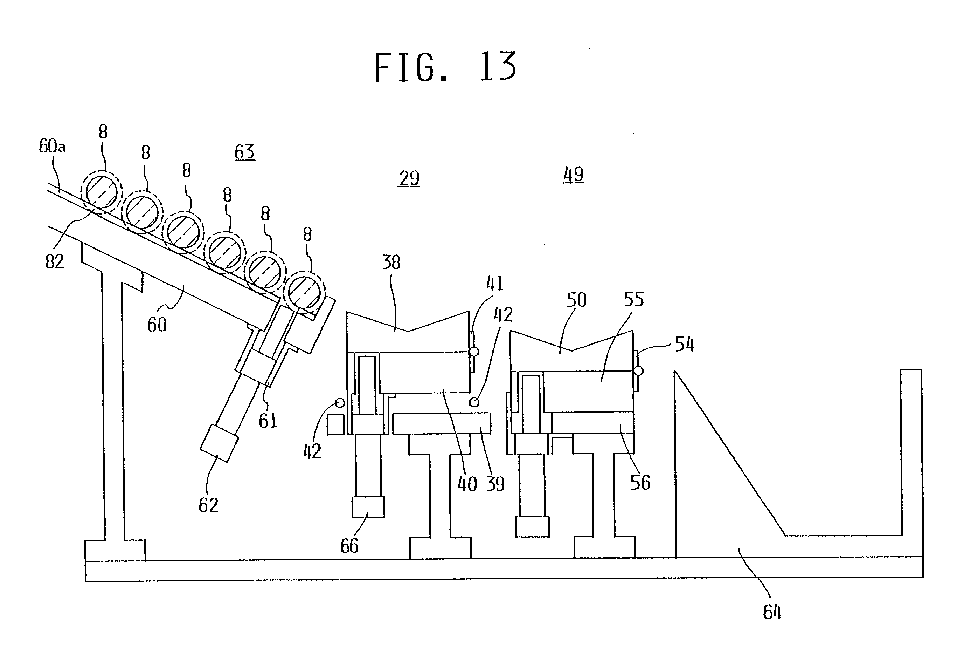

Figure 12 is a sectional view showing a fifth modification of the Figure 2 sample carier 8. The sample carrier 8 of Figure 12 is formed with a peripheral outer annular recess 82 on a central portion of the outer cylindrical shell 6 for guiding the transfer of the sample carrier 8. For example, as shown in Figure 13, the auto-holder-loader 63 comprises a tray 60 as described before in connection with Figure 6A. The slanting tray 60 is formed on its bottom face with a guide rail 60a which extends downward to the outlet of the tray 60. The individual sample carriers 8 are aligned along the tray 60 and are engaged at their outer annular recesses 82 with the guide rail 60a so as to ensure regular rolling movement of the sample carriers 8.

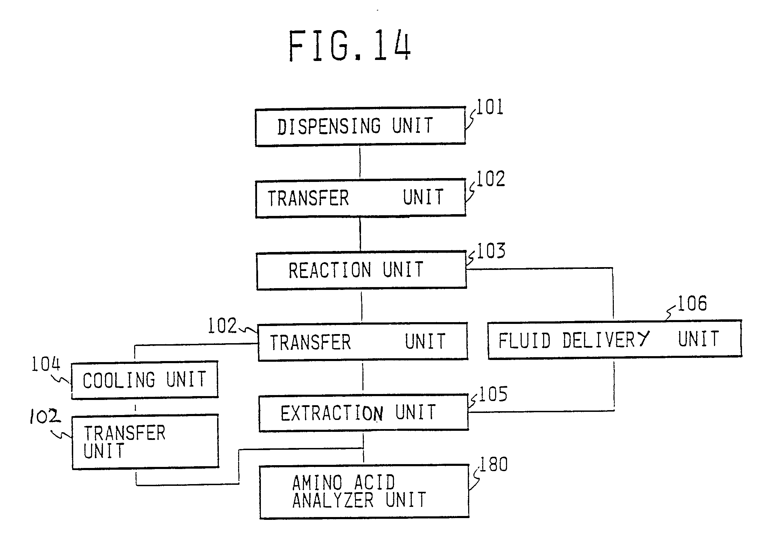

A second embodiment of an apparatus according to the present invention will now be described. Figure 14 is a block diagram showing a schematic arrangement of a second embodiment of an apparatus for carrying out hydrolysis of protein or peptide. The apparatus comprises a dispensing or loading unit 101 for loading sample carriers which carry a dried sample of protein or peptide; a common transfer unit 102 for the sample carriers; a reaction unit 103 for effecting hydrolysis between the dried sample and an acid-containing gas; a cooling unit 104 for cooling a sample carrier which carries the hydrolyzed sample; an extraction and injection unit 105 for producing a flow of an extractive fluid through the hydrolyzed sample so as to extract the hydrolyzed sample from a sample carrier in the form of a sample solution and for injecting the extracted sample into an amino acid analyzer unit 180, and a fluid delivery or supply unit 106 for delivering or supplying fluid to the reaction unit 103 and to the extraction and injection unit 105. The sample or protein of peptide is hydrolyzed to amino acids through the units 101-106 and is directly injected into the amino acid analyzer unit 180.

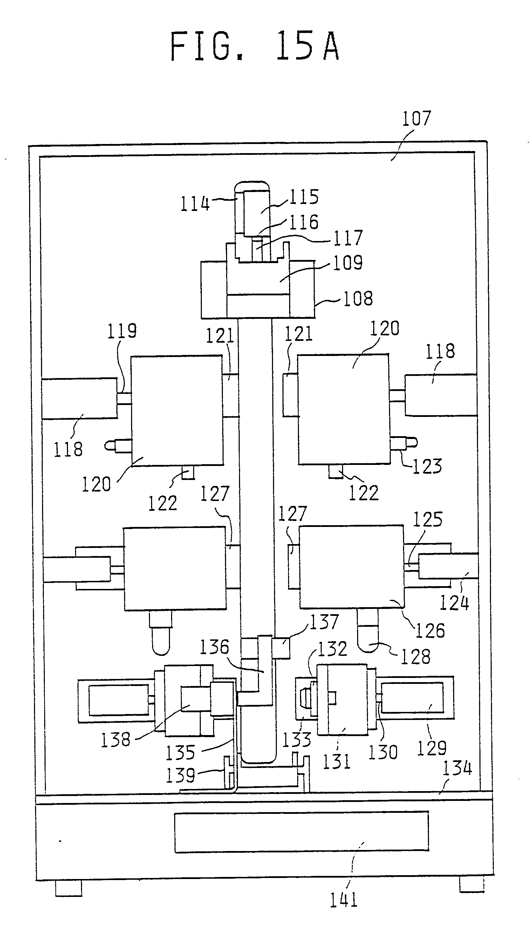

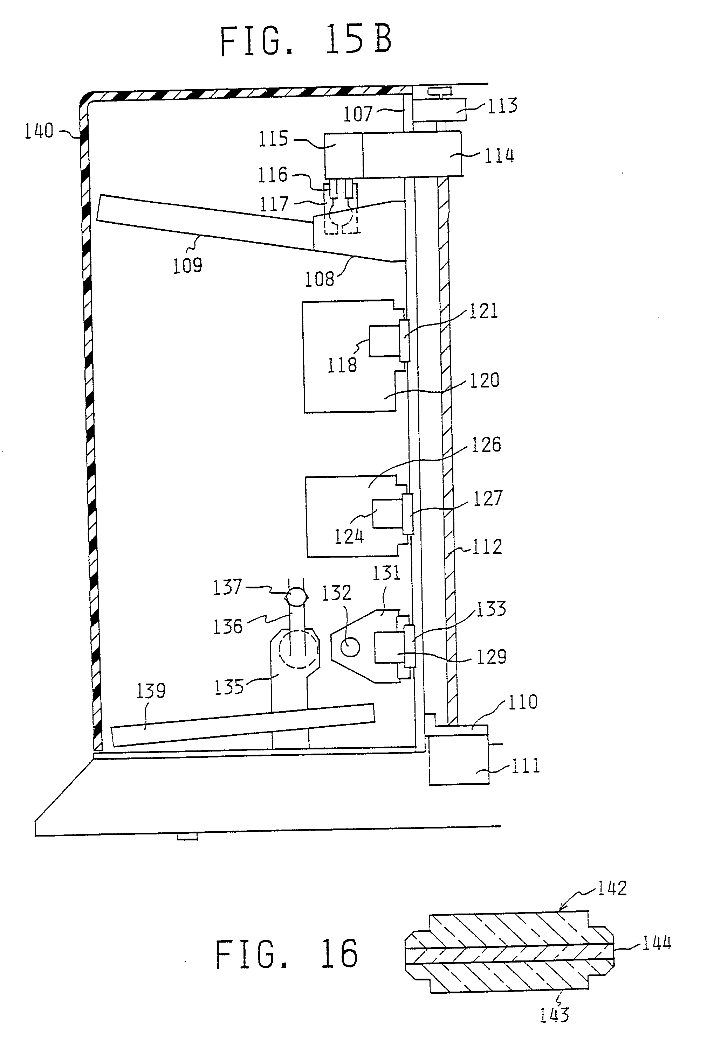

The detailed construction of the second embodiment for the hydrolysis of protein or peptide will now be

8

described. Figure 15A is a front view of the hydrolysis apparatus of Figure 14 and Figure 15B is a side view of the hydrolysis apparatus.

The sample loading or dispensing unit or mechanism 101 comprises a tray retainer 108 fixed to a panel 107. A feed or loading tray 109 is fixed at one end to the tray retainer 108 and is tilted downwards to the panel 107.

The transfer unit 102 comprises a motor 111, a lead screw 112 driven by the motor 111, a shaft retainer 113, a cylinder retainer 114 movable upwards and downwards in response to the rotation of the lead screw 112, an air cylinder 115 fixed to the cylinder retainer 114, and a gripper 117 connected to a pair of arms 116 of the air cylinder 115.

The reaction unit 103 comprises a pair of air cylinders 118, a pair of heating boxes 120 connected to the respective air cylinders 118 through shafts 119, a pair of guide rails 121 for guiding and supporting the respective heating boxes 122, a pair of tube connectors 122, and a circulator tube 123 for circulating a thermal medium effective to maintain the connectors 122 at a constant temperature.

The cooling unit 104 comprises a pair of air cylinders 124, a pair of heat-dissipating boxes 126 connected to the respective air cylinders 124 through shafts 125, a pair of guide rails 127 for guiding and supporting the respective heat-dissipating boxes 126, and a circulating tube 128 for circulating coolant.

The extraction and injection mechanism or unit 105 comprises a pair of air cylinders 129, a plate 131 connected to one of the air cylinders 129 through a shaft 130, a nozzle 132 extending from the plate 131, a guide rail 133 for guiding and supporting the plate 131, a cylinder retainer 135 fixed to a base 134, and another air cylinder 138 fixed to the cylinder retainer 135 for displacing a dummy sample holder 137 through an arm 136. Further, the apparatus has a recovery tray 139, a cover 140 and an operating or control panel 141.

Figure 16 is a sectional view showing one example of a sample holder 142 which may be used in the apparatus of Figures 15A and 15B. The sample holder or sample carrier 142 comprises a glass outer cylinder or shell 143 and a glass filter 144 which is made of porous glass and which is disposed in the cylinder 143 for supporting a sample.

Firstly, referring to Figures 15A and 15B, one or more of the sample holders 142 is stored in the loading tray 109. Then, each sample holder 142 is gripped one by one by the gripper 117 with the aid of the air cylinder 115. Thereafter, the gripped sample holder 142 is transferred to a position between the pair of spaced heating boxes 120 by means of the lead screw 112 and motor 111. Next, the heating boxes 120 are moved to a closed position so as to enclose the sample holder 142, the heating boxes 120 being moved by means of the air cylinders 118. In this stage, acid-containing gas is applied to the sample of protein or peptide under the application of heat and pressure to effect hydrolysis. Then, the sample holder 142 which supports the hydrolyzed sample is further transferred to a position between the pair of spaced heat-dissipating boxes 126 by means of a transfer unit or mechanism 102. The heat-dissipating boxes 126 are then moved to a closed position by means of the cylinders 124 so as to enclose the sample holder 142 to cool the same. The cooled sample holder 142 is further transferred to the extraction and injection unit 105 by means of a transfer unit or mechanism 102. In this unit, the sample holder 142 is fixed to the nozzle 132 through the air cylinder 129. Thus, the hydrolyzed sample is extracted. The empty sample holder 142 after the extraction is transferred to the recovery tray 139 by means of a transfer unit or mechanism 102. Next, the dummy sample holder 137 is fixed to the nozzle 132 by means of the air cylinder 138 and air cylinder 129. Then, the extraction and injection unit 105 is washed. By means of such steps, the sequential operation is completed to effect treatment of the sample in one sample holder 142. A plurality of sample holders 142 can be repeatedly treated in this way so as to carry out continuous processing.

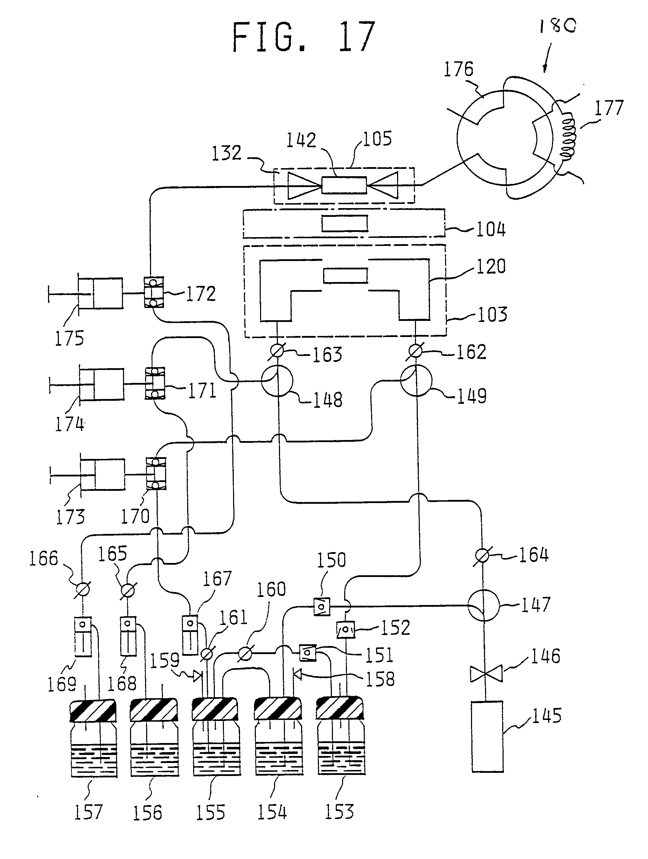

The construction and operation of the fluid or solution delivery or supply unit or mechanism 106 will now be described. Figure 17 is a flow pass diagram showing one embodiment of a flow system which may be used in an hydrolysis apparatus according to the present invention. The solution delivery mechanism 106 comprises a nitrogen gas bottle 145, a regulator therefor 146, three-way valves 147, 148 and 149, reverse-flow-preventing valves 150, 151 and 152, solution or fluid containers 153, 154, 155, 156 and 157, safety valves 158 and 159, two-way valves 160, 161, 162, 163,, 164, 165 and 166, air traps 167, 168 and 169, three-way valves 170, 171 and 172 each composed of a pair of reverse-flow-preventing valves, syringes 173, 174 and 175, and Teflon (Registered Trade Mark) tubes connecting these components with each other.

Firstly, oxygen is removed or purged from an acid- containing solution stored in the solution container 155. For this, nitrogen gas is caused to flow from the nitrogen bottle 145 through the regulator 146, the three-way valve 147, the reverse-flow-preventing valve 150, the buffer solution container 154 which generally contains the same acid-containing solution, the solution container 155, the two-way valve 160, and the reverse-flow-preventing valve 151 to the solution container 153 which stores alkali solution. The syringes 173, 174 and 175 draw, respectively, the acid-containing solution stored in the solution container 155, water contained in the solution container 156, and diluted hydrochloric acid stored in the solution container 157. The syringe 173 is fed with the corresponding solution through the solution container 155, two-way valve 161, air trap 167 and three-way valve 170'; the syringe 174 is fed with the corresponding solution through the solution container 156, air trap 168, two-way valve 165 and three-way valve 171; and the syringe 175 is supplied through the solution container 157, air trap 169, two-way valve 166 and three-way valve 172. By such operation, the preparation step is finished and the processing of a sample is started as follows.

Firstly, nitrogen gas is fed to a sample holder 142 enclosed in the heating boxes 120 of the reaction unit 103 to remove oxygen from the sample holder 142 and from the heating boxes 120. At this time, the nitrogen gas is circulated to the solution container 153 through the nitrogen bottle 145, regulator 146, three-way valve 147, two-way valve 164, three-way valve 148, two-way valve 163, heating boxes 120, sample holder 142, two-way valve 162, three-way valve 149 and reverse-flow-preventing valve 152. Next, the two-way valve 163 is closed and three-way valve 149 is switched so that the acid-containing solution is fed from the syringe 173 to the heating boxes 120. Then, the two-way valve 162 is closed to carry out hydrolysis. At this stage, all of or part of the fed acid-containing solution is vaporized and reacts with the sample under the application of heat and pressure.

After the completion of hydrolysis, the three-way valve 149 is switched, the two-way valve 162 is opened, the two-way valve 163 is also opened and the three-way valve 148 is switched so that water is fed from the syringe 174 so as to generate steam in the closed heating boxes 120 to thereby remove the remaining reactive acid from the heating boxes 120 and from the sample holder 142. The removed acid is recovered in the solution container 153.

Thereafter, the sample holder 142 is cooled in the cooling unit 104 to ensure steam line operation and is then transferred to the extraction and injection unit 105. In this stage, the sample holder 142 is held by and connected between the pair of nozzles 132, and diluted hydrochloric acid is fed to the sample holder 142 by means of the syringe 175 to extract amino acids which are the resulting substances of the hydrolysis of the sample and which are supported in the porous glass filter 144 of sample holder 142. This extracted solution is discharged on line directly to a sample injection device 176 of an automatic amino acid analyzer 180 and is stored in a sample loop 177. Then, the auto-analysis of amino acids is carried out in known manner. By such an operation, the hydrolysis of a protein or peptide sample is effected and the resulting substances are directly discharged to the amino acid analyzer 180 to complete the amino acid composition analysis. It would be possible to recover the hydrolyzed sample in a solution recovery device such as a fraction collector instead of injecting the hydrolyzed sample into the sample injection device of automatic amino acid analyzer. In the above described apparatus, the operation of the respective units and the switching of respective valves is controlled through the control panel 141 disposed at the front of the apparatus.

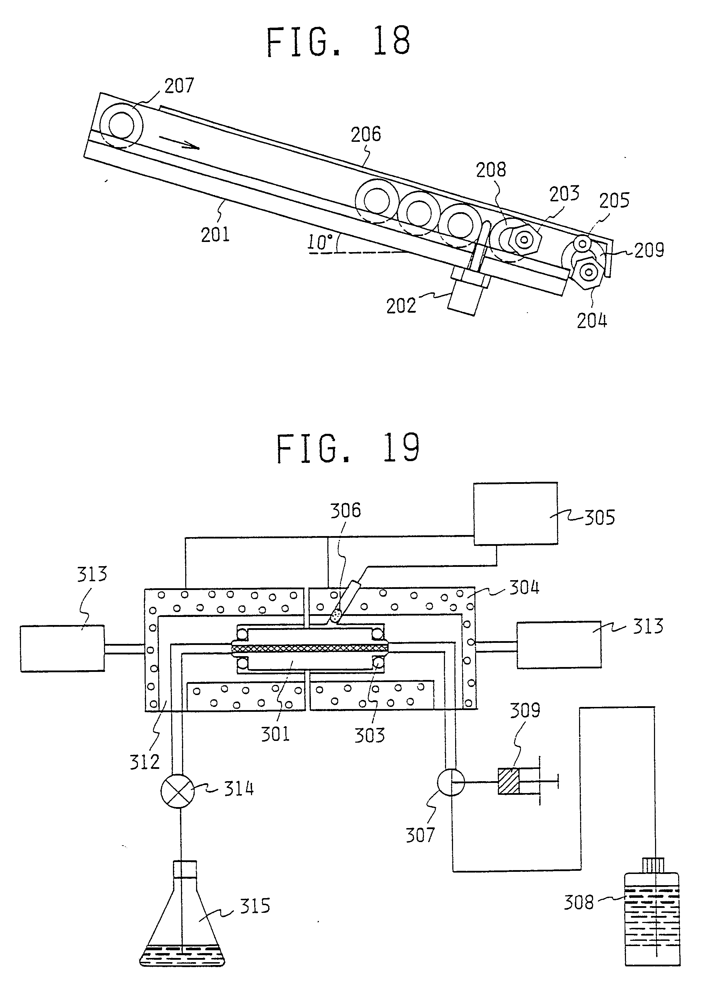

Figure 18 shows one embodiment of a loading unit of a sample holder which may be used, for example, in the Figure 14 apparatus for automatically carrying out a particular chemical process of hydrolyzing protein or peptide.

As shown in Figure 18, a slanting tray 201 having a tilt angle of 10° is provided with a pin cylinder 202 protruding from the bottom of the tray 201, a pair of pin cylinders 203 and 204 protruding inwardly from one side of the tray 201, an optical fibre sensor 205, and a top cover 206 disposed over the tray 201. A plurality of sample holders 207 are aligned along the tray 201 so as to roll down when released, the top cover 206 protecting the sample holders 207 from dust.

At the first step of the supplying or dispensing unit of the sample holder, a target sample holder to be subjected to the treatment or chemical measurement is held by the pair of pin cylinders 202 and 203, and stands still at a waiting position 208. At this time, the other pin cylinder 204 is retracted, and the optical fibre sensor 205 detects the absence of any sample holder in the downstream pick-up position 209 and outputs a detection signal to a controller of the apparatus. Next, when the transfer unit is made ready, the standing sample holder 207 rolls down to the pick-up position 209. Namely, this second step is carried out by arranging that the pin cylinder 203 is retracted to release the sample holder to roll down to the pick-up position 209 at which the pin cylinder 204 is projected inwardly to stop the sample holder. At the third step, the pin cylinder 202 is retracted or lowered and the pin cylinder 203 is extended so that the next sample holder is placed in the waiting position 208 and stands still. The pick-up position 209 is separated from the waiting position 208 by a distance of 3cm which is sufficient to enable the gripper to pick-up the sample holder 207. By repeatedly carrying out these steps, sample holders 207 are supplied or dispensed one by one at the correct times to the transfer unit. Further, the number of the pin cylinders operating is counted to determine the number of sample holders 207 to be treated. This counted information is fed to the controller of the apparatus to avoid misoperation of the supply or dispensing unit and of the transfer units of the

10

sample holders even when the number of stocked sample holders is greater than the number of steps in the chemical process. The optical fibre sensor 205 sends to the controller a signal representative of whether a sample holder 207 is present or absent at the pick-up position 209 so as to control the transfer unit and to avoid misoperation of the transfer unit when a sample holder 207 is absent at the pick-up position 209.

The upper cover 206 is so disposed as to avoid disturbing the alignment of the sample holders when the latter roll down so as to ensure regular movement of each sample holder and so as to prevent dust from adhering to the sample holders.

In the dispensing mechanism shown in Figure 18, a plurality of sample holders 207 aligned on the slanting tray 201 are rolled down one by one according to the reciprocating movement of the pin cylinders to a pick-up position 209. When the sensor 205 detects that an individual sample holder 207 has arrived at the pick-up position 209, the sample holder 207 is gripped by a gripper and transferred by the transfer mechanism. At this time, the next sample holder 207 is held by another pin cylinder, and stays at a waiting position 208 until the transfer mechanism is made ready. When a sample holder 207 rolls down the slanting tray 201, the upper cover 206 which overlies the sample holders 207 limits floating of the sample holders 207 so as to allow only rolling movement thereof. For this, the dispensing unit of the sample holders and the transfer unit utilizing the gripper are coupled to each other to carry out quick automation of a complicated chemical process.

Figure 19 shows one embodiment of a reaction unit 103 which may be used, for example, in the Figure 14 apparatus. The reaction unit 103 is divided into two parts which can be opened by a driving mechanism 313 and can be closed with tight sealing. In order to prevent the vapour of the acid-containing solution from leaking outside the reaction unit 103, a sealer may be interposed between opposed openings of the two parts. In this embodiment, however, an O-ring sealer 303 is interposed between an end portion of a sample carrier 301 and an inner wall of the reaction unit. A two-way valve 314 is inserted between an outlet of the unit and a recovery bottle 315 in which the used vapour of the acid-containing solution is collected. The acid-containing solution is supplied from a bottle 308 to the reaction unit through a valve 307 and a syringe 309. For example, a standard sample of protein and peptide can be hydrolyzed by the Figure 19 reaction unit by using a solution containing trifluoroacetic acid and hydrochloric acid. The sample may be held at 158°C and, immediately after the reaction unit reaches the set temperature, the acid-containing solution is introduced into the reaction unit to cause its vapour to contact the sample. Thereafter, the reaction may be undertaken for 23 minutes. After the hydrolysis, the hydrolyzed substances may be analyzed by an amino acid analyzer. The results show that the sample is substantially perfectly hydrolyzed. It has been found through experiments in which the processing temperature and the times are changed that the processing temperature is preferably set at from 140° to 170°C and that the processing time is preferably set at at least 5 minutes in order to achieve sufficient hydrolysis.

The material of the sealer 303 is next described. Generally, the sealer 303 is composed of thermo-resistant and acid-resistant material. For example, Teflon or Diflon (Registered Trade Marks) is shaped in the form of an O-ring or sheet. However, this material deteriorates upon exposure to acid vapour at high temperature, and therefore must be frequently replaced. For a more preferable material which is less likely to deteriorate, a thermo-resistant and acid-resistant elastomer can be utilized, such as, for example, Kalrez (Registered Trade Mark) of Dupont which is hardly subject to degradation and can be repeatedly used.

The reaction unit of Figure 19 can carry out hydrolysis of gas phase reaction so as to enable fast and highly sensitive hydrolysis to be effected, thereby eliminating the drawbacks of the prior art such as complicated glass shaping requiring skill, individual manipulation and contamination.

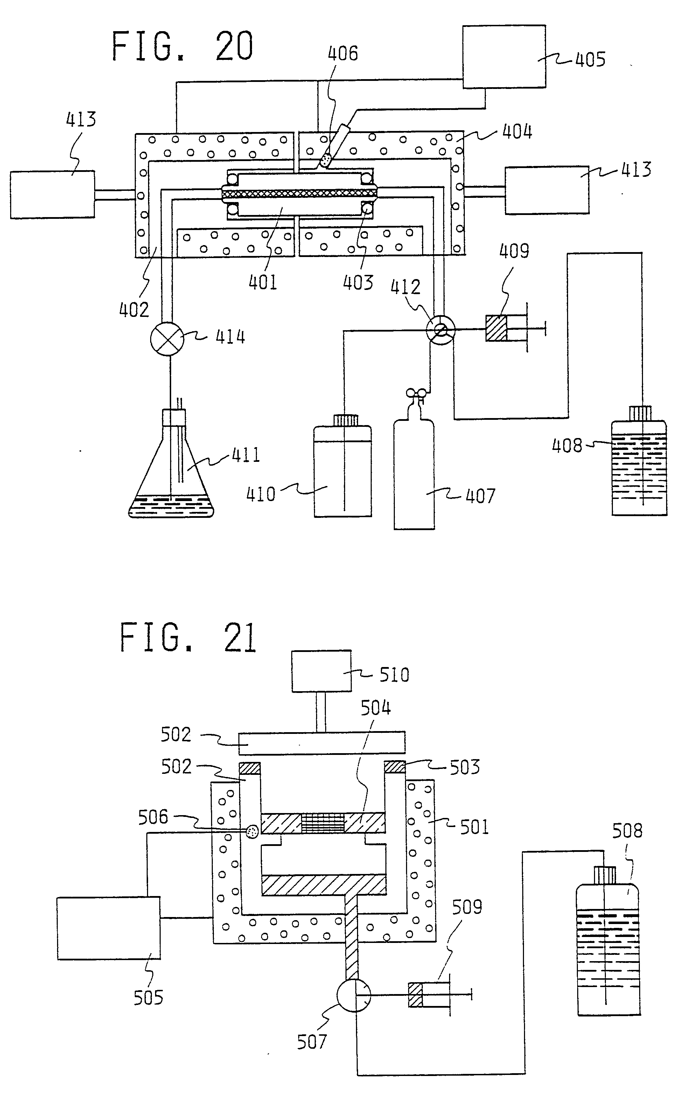

Another embodiment of the reaction unit is shown in Figure 20 in which a sample carrier 401 is used which comprises a glass tube and a filter. The sample carrier 401 is stored in a pair of reaction boxes or containers 402 which are reciprocatively movable towards and away from each other by means of an opening and closing mechanism 413. At this time, the sample carrier 401 is fixed in position by a sealer 403. Next, a valve 412 and a two-way valve 414 are opened, and inert gas is fed from an inert gas bottle 407 to remove oxygen from a space in the valve 412, from a pair of reaction containers 402, from the sample carrier 401 and from the two-way valve 414. Next, the two-way valve 414 is closed and the valve 412 is switched so that acid-containing solution containing hydrochloric acid and trifluoroacetic acid is introduced into the closed reaction containers 402 by means of a syringe 409. The syringe 409 has previously sucked the acid-containing solution from a bottle 408 of the acid-containing solution.

The pair of reaction containers 402 are maintained at 158°C by means of a heater 404, temperature sensor 406 and heat controller 405 so that all or part of the solution fed into the reaction containers 402 is vaporized. Next, the valve 412 is closed so that the space between the valve 412 and the two-way valve 414 is sealed in order that the internal pressure of the space is boosted due to evaporation of the fed solution. Thus, the acid vapour reacts with the sample of protein or peptide carried in the sample holder or carrier 401 under the application of heat and pressure to effect hydrolysis based on solid phase/gas phase reaction. Such a conduction is maintained for a predetermined time interval, and thereafter the two-way valve 414 is opened to collect excessive vapour and solution of the acid in a recovery bottle 411. Next, the valve 412 is switched so that water is gradually fed to the reaction containers 402 from the syringe 409. The syringe 409 has sucked water from a water bottle 410 during the hydrolysis reaction. The water is vaporized in the heated reaction containers to replace the remaining vapour of the acid in the reaction containers 402. Then, the valve 412 is switched. The inert gas is fed again from the inert gas bottle 407 to the reaction containers 402 to remove the water vapour. By repeating the above steps, the process is completely automated through removal or purging of oxygen prior to the hydrolysis reaction. The hydrolysis based on solid phase/gas phase reaction and the removal of acid vapour by water vapour and inert gas is thus effected so as to treat a plurality of samples continuously. The typical reaction condition is, for example, a temperature of 158° C for 22.5 - 45 minutes.

Figure 21 is a schematic view of a simplified embodiment of the reaction unit. The reaction unit for hydrolyzing protein or peptide is constructed so that a reaction chamber 502 is loaded with a sample carrier 504 which carries a dried sample of protein or peptide. The reaction chamber 502 can be closed and opened to position the sample carrier 504 therein. When the sample carrier 504 is positioned within the reaction chamber 502, the reaction chamber 502 is closed and is pressed at its opening edge by a chamber lid through a press device 510. In this case, a sealer 503 composed of thermo-resistant and acid-resistant elastomer is provided along the opening edge to effect tight sealing of the chamber. Next, a heating means comprising a heater 501 and a heat controller 505 is operated to heat the sample carrier 504 to a set temperature above 100° C. When the temperature reaches the set value, the set temperature is maintained for a given length of time by means of a temperature sensor 506 provided in the reaction chamber 502, the heater 501 and the heat controller 505. While the sample carrier 504 is maintained at the set temperature above 100° C, a vapour of acid-containing solution must be made to contact the sample.

The vapour is fed by charging an acid-containing solution from a container 508 through a three-way valve 507 and a syringe 509 to the reaction chamber 502. At this stage, the acid-containing solution must be kept away from the sample carrier holder 504. Since the reaction chamber 502 is entirely heated above 100° C, the acid-containing solution charged into the reaction chamber 502 is vaporized to an acid-containing gas which comes into contact with the sample held in the sample holder 504 to effect hydrolysis. In this stage, the three-way valve 507 is closed and the thermo-resistant and acid-resistant sealer 503 is pressed to prevent the vapour of acid-containing solution from leaking outside the reaction chamber 502. As a result, the internal pressure is boosted within the reaction chamber 502 to accelerate the hydrolysis. The time interval is set according to the completion of the hydrolysis so as thereby to finish the hydrolysis perfectly. After the hydrolysis, the reaction chamber is opened and the sample holder is taken out and transferred to the subsequent stage.

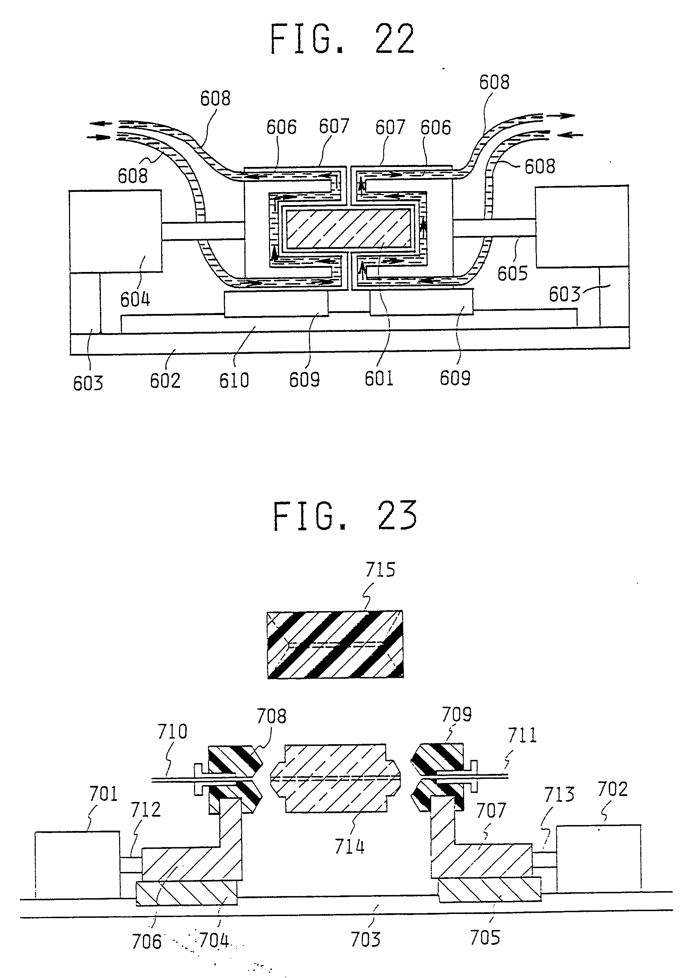

Figure 22 is a sectional view showing one embodiment of a cooling unit which may be used in an apparatus according to the present invention. As shown in Figure 22, a sample holder 601 is loaded in the cooling unit. A pair of container boxes 607 are disposed on a base 602 in opposed relation to each other. Each container box 607 has a flow path 606 for circulating coolant along an inner wall thereof and is connected at its rear portion to a top end of a piston 605 of an air cylinder 604 which is mounted on the base 602 through a respective support 603. Tubes 608 are connected to the inlet and outlet of the flow path to circulate the coolant. Each container 607 is formed therein with a cavity and is fixed to a corresponding guide 609 which is disposed on a rail 610 to undergo smooth reciprocating movement along the rail 610 by means of the respective air cylinder 604. By means of such a construction, the pair of container boxes 607 can receive therein a sample holder 601 to cool the same. Further, the pair of container boxes 607 are moved relative to and from each other so as to close and open the cooling unit to automatically load and unload the sample holder 601.

As described above, in the Figure 22 embodiment, the cooling unit comprises a pair of container boxes 607 disposed in opposed relation to each other and having a flow path for circulating coolant inside thereof and a cavity. The cooling unit also has a drive source 604 for effecting reciprocating movement of the container boxes 607 relative to each other to close and open the cooling unit. By means of such a construction, the sample holder 601 which carries the sample or its resultant substance produced by the chemical process can be automatically and continuously cooled in the apparatus for automating a chemical process.

One embodiment of an extraction unit which may be used in the apparatus of the present invention is shown in Figure 23 which is a front view of the extraction unit. As shown in Figure 23, a pair of air cylinders 701 and 702 are opposed to each other. A pair of nozzle support plates 706 and 707 are disposed on rails 703 and are driven linearly by respective pistons 712 and 713 connected to the corresponding air cylinders 701 and 702. A pair of nozzles 708 and 709 are supported by the respective plates 706 and 707. A pair of tubes 710 and 711 are connected to respective central flow paths of the nozzles 708 and 709. The nozzle support plates 706 and 707 are mounted on respective tables 704 and 705 for sliding movement along the rails 703. This sliding movement is effected by means of the respective pistons 712 and 713 in opening and closing directions relative to each other to selectively load and unload a sample carrier 714 and a dummy or washing carrier 715 (Figure 24A) between the nozzles 708 and 709. An end face of each of the nozzles 708 and 709 is shaped so as to come into face-to-face contact with each end of the cylindrical sample carrier 714 and with each end face of the cylindrical dummy carrier 715 so as to constitute a flow path for extraction and washing, respectively. In particular, these end faces are accurately finished to avoid leakage of an extraction solution and of a washing solution. The end face of each of the nozzles 708 and 709 has an inner central section shaped to fit with a convex end face of the sample carrier 714, and an outer peripheral section separate from the inner section and shaped to fit with a concave end face of the dummy carrier 715. In operation, the sample carrier 714 is held between the pair of nozzles 708 and 709 to permit a flow of extraction solution through the cylindrical sample carrier 714, and thereafter the sample carrier 714 is replaced by the dummy carrier 715 to permit a flow of the washing solution to wash the freed inner section of the end face of each of the nozzles 708 and 709.

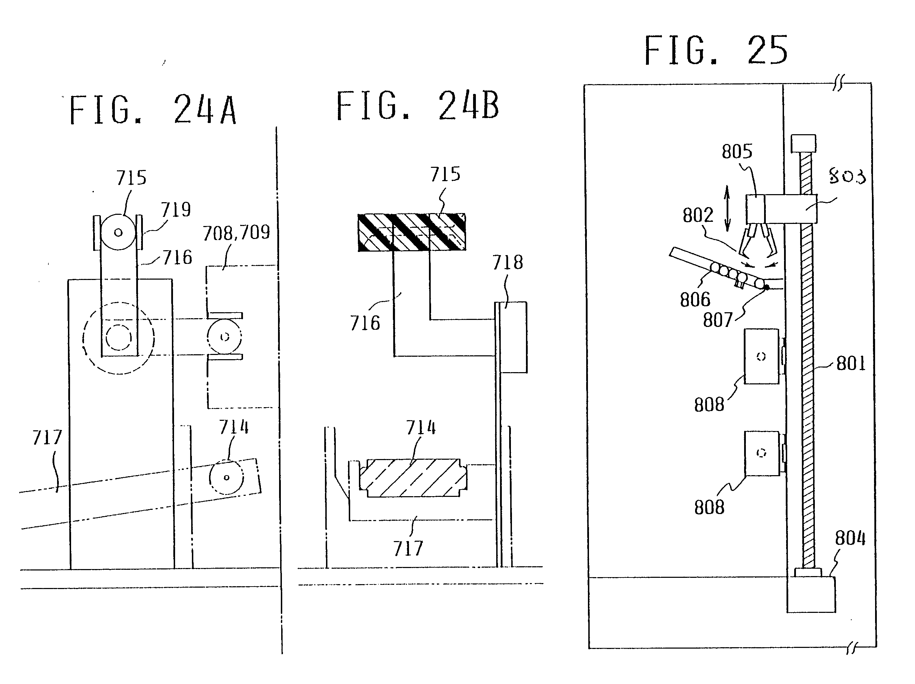

Next, a description is provided of the way in which the dummy carrier 715 is replaced between the nozzles 708 and 709, this description being provided with reference to Figure 24A which shows a side view of the replacement mechanism of the washing carrier 715 and with reference to Figure 24B which is a front view of the replacement mechanism. The dummy carrier 715 is held by a gripper 719 mounted on an arm 716. When the arm 716 is rotated through 90° by an air cylinder 718, the dummy carrier 715 is placed between the nozzle support plates 706 and 707. At the same time, the sample carrier 714 which had been fixed between the nozzles 708 and 709 is released as a result of opening movement of the nozzle support plates 706 and 707 and is withdrawn to a tray 717. The above sequence of steps is controlled by a panel controller.

The extraction mechanism thus comprises a pair of air cylinders 701, 702 provided with respective nozzles 708, 709 each having an end face which can be made complementary to an end face of a sample carrier 714, the mechanism comprising a pair of tubes 710, 711 each connected to a central flow path of the corresponding nozzle. The arrangement is such that a sample carrier 714, the pair of nozzles 708, 709 fitted on the opposite end faces of the sample carrier 714 and the tubes 710, 711 constitute a path for fluid effective to extract the sample in the sample carrier 714. The extraction unit is further provided with a washing means for the nozzles 708, 709 and a switching means for switching between the sample carrier 714 and a dummy carrier 715 for washing of the nozzles 708, 709.

By such a construction of the extraction unit, the step of extracting amino acids can be mechanically carried out without any manipulation by hand. Consequently, the extraction unit can eliminate various drawbacks of the prior art such as the need for high operational skill, extraction errors and contamination by a foreign amino acid other than that which originates from the sample of protein or peptide. Moreover, the step of extracting amino acids can be mechanically and continuously carried out.

As will be understood from the above description, the extraction of amino acids from the sample carrier can be automated, thereby achieving the following three remarkable advantages: (1) elimination of complicated handling; (2) reduction of extraction error; and (3) prevention of sample contamination.

Figure 25 shows one embodiment of the transfer unit or mechanism of a sample holder which may be used in the Figure 14 apparatus for automating a chemical process of hydrolyzing a protein or a peptide. A lead or bowl screw 801 and an arm 803 which supports a gripper 802 are coupled to each other in a lead screw-nut construction. A motor 804 is connected to the bottom end of the lead screw 801, and is driven so as to rotate bi-directionally the lead screw 801 so that the arm 803 and gripper 802 are displaced downwardly and upwardly. The maximum stroke of the gripper 802 is set at about 45cm, and the position thereof can be accurately controlled in terms of the number of revolutions of the motor 804. The arm 803 has at its end an air cylinder 805 connected to the gripper 802. Since the gripper 802 is driven by the air cylinder 805, no excessive force is applied to a sample holder 806 when picking up the same.

The pick-up operation of the gripper 802 is carried out in four steps to grip and transfer a sample holder 806 from a sample holder dispensing unit. In the first step, the dispensing unit feeds to a controller of the apparatus a signal indicative of the fact that a sample holder 806 is present at a pick-up position. In the second step, the motor 804 is started in response to this signal so as to lower the gripper 802 by means of the lead screw 801 and arm 803, the motor 804 continuing to rotate until the gripper 802 arrives at a position effective to act on the sample holder 806 while the gripper 802 is held open. In the third step, when the gripper 802 is stopped, the air cylinder 805 mounted on the arm 803 is operated to close the gripper 802 to hold the sample holder 806. In the last, i.e. the fourth step, a pin cylinder 807 is unlocked to release the sample holder 806 held at the pick-up position of the dispensing unit, and the motor 804 is again rotated to transfer the sample holder 806 which is gripped by the gripper 802 to a position where a holding unit 808 is located.

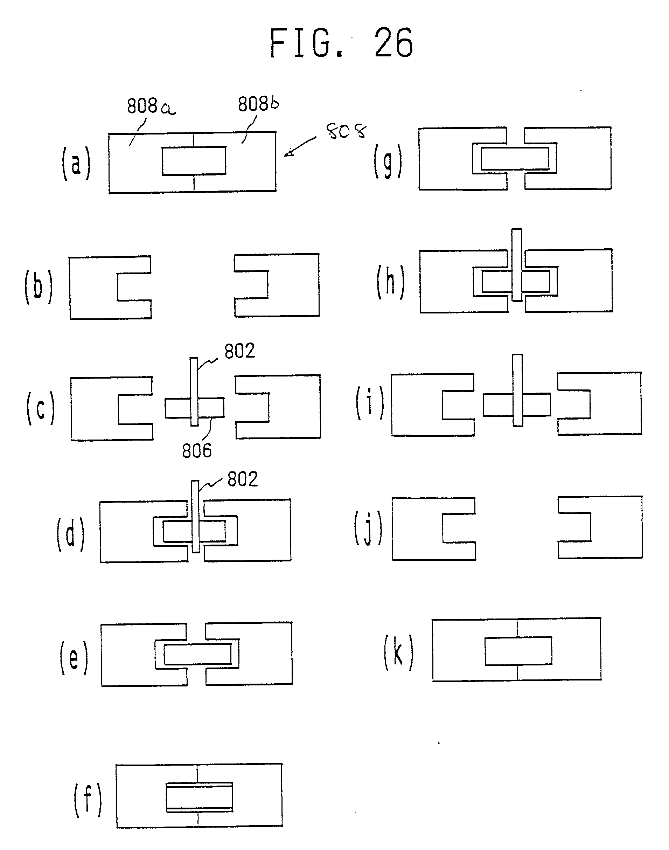

Figure 26 is an illustrative sequence chart showing operation of the gripper 802 to load and unload the sample holder 806 in and from the holding unit 808. The holding unit 808 is divided into left and right parts 808a, 808b which are displaceable relative to each other in closing and opening directions to close and open the holding unit 808. The holding unit 808 is closed during a waiting state thereof (Figure 26(a)) until the gripper 802 holds the sample holder 806 and transfers the latter to the holding unit. When the gripper 802 and the sample holder 806 approach the holding unit 808, the holding unit 808 is opened by means of springs (not shown) connected between the holding unit and a frame of the apparatus to prepare for the loading or receiving of the sample holder 806 (Figure 26(b)). When the sample holder 806 is moved into the open storage unit 808, the gripper 802 is stopped and kept in position (Figure 26(c)). One pair of air cylinders (not shown) connected to the respective left and right parts of 808a, 808b of the holding unit 808 are operated to partly close the holding unit while leaving an escape gap between the left and right parts 808a, 808b for the gripper 802. In this condition, the sample holder 806 is held by the holding unit 808 to avoid displacement of the sample holder 806 when the gripper 802 is released (Figure 26(d)). Next, the gripper 802 is first opened to release the sample holder 806 and is then retracted from the holding unit through the escape gap by means of the motor 804 and lead screw 801 (Figure 26(e)). Then, another pair of air cylinders connected to the respective left and right parts 808a, 808b of the holding unit are operated to close the holding unit completely so as to seal the sample holder 806 (Figure 26(f)). In this condition, the chemical process is undertaken to treat a sample supported in the sample holder 806. Thereafter, the said other pair of air cylinders are released so that the holding unit 808 is partly opened by the force of the said springs while providing a gap corresponding to the width or thickness of the gripper 802 (Figure 26(g)). The gripper 802 is then moved from its home or rest position into the partly open holding unit 808 through the gap to thereby grip the sample holder 806 (Figure 26(h)). The said one pair of air cylinders are then released to open the holding unit completely (Figure 26(i)). The sample holder 806 is unloaded from the open holding unit and is transferred to a next holding unit for a subsequent chemical process while being gripped by the gripper 802 (Figure 26(j)). The holding unit is closed by means of the air cylinders to return to the initial waiting state (Figure 26(k)). In this apparatus, a pair of such holding units are provided to effect, respectively, hydrolysis of the sample and cooling thereof within each holding unit.

In operation, when a loading unit such as shown in Figure 18 is operated to place a sample holder 806 at a pick-up position, the motor 804 is started so as to move the arm 803 which supports the gripper 802 to a pick-up position. Next, pressurized air is applied to the air cylinder 805 to drive the gripper 802 to hold the sample holder 806. When the pin cylinder 204 of the loading unit is unlocked to release the sample holder 806, the motor 804 is rotated again to transfer the sample holder 806 to the position of the holding unit by means of the lead screw 801 and arm 803. Concurrently, the divided holding unit is switched from the closed state to the open state to receive therein the sample holder 806. One pair of the air cylinders is driven to partly close the divided holding unit while leaving a gap corresponding to the width of the gripper 802, and the sample holder 806 is held by the opposed parts 808a, 808b of the holding unit. Then, the gripper 802 is opened to release the sample holder 806 and is retracted from the partly closed holding unit through the escape gap. The gripper 802 and arm 803 return to their home position by means of the motor 804 and lead screw 801. When the gripper 802 leaves the holding unit, another pair of air cylinders are operated to completely close the holding unit to thereby seal the sample holder 806. A predetermined chemical process is undertaken in the holding unit, and thereafter the sample holder 806 is unloaded by reverse sequence to the loading, and is picked up by the gripper 802 and transferred to the next holding unit.

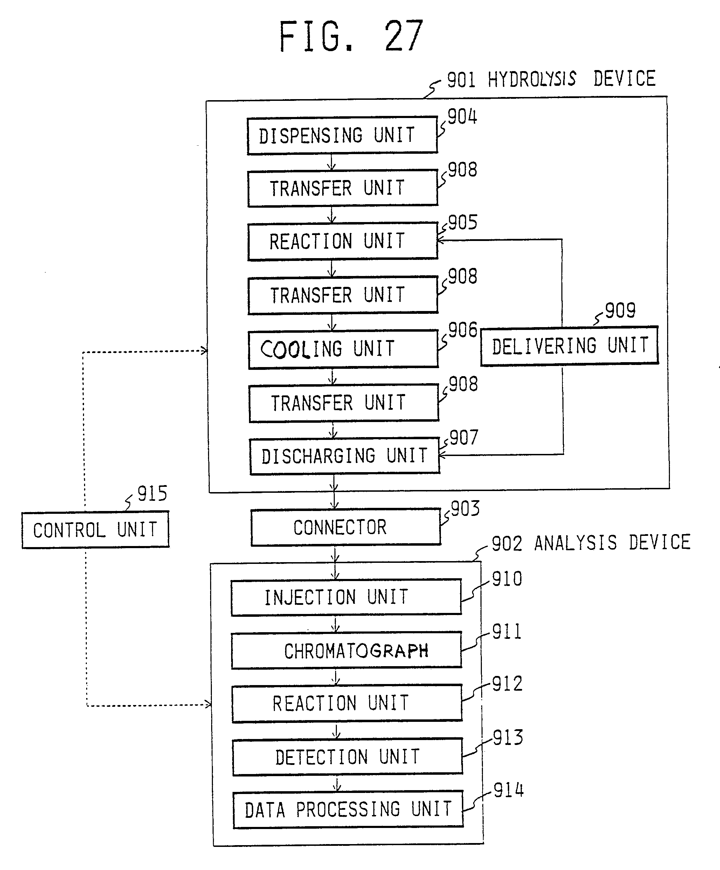

Lastly, a third embodiment of the apparatus of the present invention is shown in the block diagram of Figure 27. The Figure 27 apparatus is for use in the analysis of amino acid composition and comprises a hydrolysis device 901, an amino acid component analysis device 902 and a connector 903 connecting the devices 901, 902.

The hydrolysis device 901 comprises a dispensing unit or sample loading unit 904 for supplying a sample or sample carrier which carries the sample; a reaction unit 905 for reacting acid-containing gas with the sample to effect an hydrolysis reaction; a cooling unit 906 for absorbing heat from the sample or the carrier which supports the sample; a discharging unit or injection unit 907 for injecting the hydrolyzed sample into the amino acid component analysis device 902 through the connector 903; transfer units 908 for transferring the sample or the carrier which carries the sample through the dispensing unit or sample loading unit 904, through the reaction unit 905, through the cooling unit 906 and through the discharging unit or injection unit 907; and a fluid delivering unit 909 for delivering to the reaction unit 905 and to the discharging unit or injection unit 907 various fluids needed for the hydrolysis reaction and for the injection of the sample, respectively.

The amino acid component analysis device 902 may comprise, for example, a sample injector or injection unit 910; a high-performance liquid chromatograph 911; a reaction unit 912; a detection unit 913; and a data processing unit 914. The hydrolysis device 901 and the amino acid component analysis device 902 are operated continuously and cooperatively with each other under the control of control unit 915.

In the embodiment of Figure 27, the protein or peptide sample is treated and hydrolyzed without any manual operation to effect amino acid component analysis by means of the hydrolysis device 901, the connector 903 and the amino acid component analysis device 902. Moreover, a plurality of samples can be continuously analyzed.

The apparatus for analyzing the amino acid composition can thus eliminate the use of any manual operation from the hydrolysis of protein or peptide and from the transfer of amino acids which are resultant substances of the hydrolysis to the amino acid analyzer, to thereby effect automatic and continuous analysis of amino acid composition of the sample protein or peptide.

Thus in the third embodiment of the present invention, the hydrolysis device 901 for hydrolyzing protein or peptide to amino acid is coupled through a connector 903 to the amino acid analysis device 902 and is driven cooperatively therewith so as to eliminate manual operation of amino acid composition analysis and so as to thereby avoid contamination and individual differences of various operators, thereby achieving accurate analysis and to provide automatic continuous operation to save the labour of the operator.

## Claims

1. An apparatus for effecting chemical treatment of a solid sample comprising treatment means (2,4,5) for causing a reactive gas phase fluid to react with a solid sample so as to effect a solid phase/gas phase reaction to produce a resultant substance characterized in that the treatment means (2,4,5) comprises means (4,5) for producing a flow of an extractive fluid through the so-treated sample so as to effect extraction of the said resultant substance, there being transfer means (1,3) for transferring the solid sample through the treatment means (2,4,5).

2. An apparatus as claimed in claim 1 characterised in that the apparatus comprises a sample carrier (8) for carrying the solid sample, the transfer means (1,3) transferring the sample carrier (8) through the treatment means (2,4,5).

3. An apparatus as claimed in claim 2 characterised by means (9) for depositing liquid containing the sample on or in the sample carrier (8) and drying means (10) for drying the said liquid, the transfer means (1,3) transferring the sample carrier (8) from the drying means (10) to the treatment means (2,4,5).

4. An apparatus as claimed in any preceding claim characterised in that the treatment means (2,4,5) comprises a reaction unit (2) in which the said reaction is effected; an extraction unit (4) in which the said extraction is effected; and a delivery unit (5) for delivering the reactive gas phase fluid and the extractive fluid to the reaction unit (2) and to the extraction unit (4) respectively.

5. An apparatus as claimed in any preceding claim characterised in that means (14) are provided for effecting the said reaction under heat and pressure.

6. An apparatus as claimed in any preceding claim characterised in that control means (141) are provided to effect sequential operation of a plurality of process steps carried out in the apparatus.

7. An apparatus as claimed in claim 2 or in any claim appendant thereto characterised in that the sample carrier (8) comprises a support (7) for carrying the sample, the support (7) being disposed in an outer shell (8).

8. An apparatus as claimed in claim 7 characterised in that the outer shell (8) comprises a cylindrical tube having at least one outer annular recess (81,82) to assist positioning of the sample carrier (8).

9. An apparatus as claimed in claim 7 or 8 characterised in that the support (7) comprises a glass filter, a glass tube (71) being disposed between the support (7) and the outer shell (8).

10. An apparatus as claimed in any of claims 7-9 characterised in that the outer shell (8) is made of a fused layer of glass.

11. An apparatus as claimed in claim 10 characterised in that the fused layer of glass is impregnated with glass adhesive to harden it.

12. An apparatus as claimed in claim 2 or in any claim appendant thereto characterised in that a loading unit (Figure 18) is provided for loading the sample carriers (207) one by one into the transfer means (1,3).

13. An apparatus as claimed in claim 12 characterised in that the loading unit comprises a slanting tray (201) for aligning the sample carriers (207) thereon; and first and second means (202,203; 204) arranged successively on the tray (201) for retaining and releasing each sample carrier (207) at successive waiting and pick-up positions (208,209).

14. An apparatus as claimed in claim 4 when dependent upon claim 2 characterized in that a cooling unit (Figure 22) is provided for cooling a sample carrier (601) which has been heated in the reaction unit (502).

15. An apparatus as claimed in claim 14 characterised in that the cooling unit comprises a pair of container members (607) which are movable towards and away from each other to enable a sample carrier (601) to be introduced between them and withdrawn therefrom, each container member (607) having a flow path (606) therein for the passage of a coolant therethrough.

16. An apparatus as claimed in claim 2 or in any claim appendant thereto characterised in that the transfer means comprises a gripper (802) for gripping a sample carrier (806); an arm (803) for supporting the gripper (802); and movement effecting means (801,804) for moving the arm (803) to effect transfer of the sample carrier (806).

17. A method of effecting chemical treatment of a solid sample comprising causing a reactive gas phase fluid to react with a solid sample in a reaction zone so as to effect a solid phase/gas phase reaction to produce a resultant substance characterised in that a flow of an extractive fluid is passed through the so-treated sample so as to effect extraction of the said resultant substance, the solid sample being transferred by transfer means (1,3) through the reaction zone.

18. A method as claimed in claim 17 characterised in that the sample is a sample of protein or peptide which is reacted with an acid-containing gas to effect hydrolysis of the sample to amino acid.

19. A method as claimed in claim 18 characterised in that the said acid-containing is produced by heating an acid-containing solution to a temperature of at least 100° C, the said gas being used in the said reaction for a period of at least 5 minutes.

20. A method as claimed in claim 19 characterised in that the acid-containing solution contains trifluoroacetic acid and hydrochloric acid.

21. A method as claimed in any one of claims 18-20 characterised in that, prior to the said hydrolysis, an inert gas is employed to purge oxygen from the sample.

22. A method as claimed in any of claims 18-21 characterised in that, after the hydrolysis, steam is employed to remove any remaining acid-containing gas.

23. An apparatus for effecting automatic chemical treatment of a solid sample with fluids, comprising: a sample carrier (8) for carrying therein a solid sample; a reaction unit (2) operative when loading therein the sample carrier (8) for reacting a reactive gas phase fluid to the solid sample under application of heat and pressure so as to undertake a solid phase/gas phase reaction to produce a resulting substance in the sample carrier (8); an extracting unit (4) operative when loaded therein the sample carrier (8) after the reaction for flowing through the loaded sample carrier (8) an extractive fluid effective to extract the resulting substance; a transferring unit for transferring the sample carrier (8) through the reaction unit (2) and the extracting unit (4); and a delivering unit (5) for delivering fluids to the reaction unit (2) and the extracting unit (4) to enable the same to effect chemical treatment of the sample.

# FIG. 1

```
┌─────────────────┐  1
│  TRANSFER UNIT  │
└────────┬────────┘
         ↓
┌─────────────────┐  2
│  REACTION UNIT  │←──────────────┐
└────────┬────────┘               │
         ↓                        │
┌─────────────────┐  3            │    ┌──────────────────────────┐  5
│  TRANSFER UNIT  │               │    │ SOLUTION DELIVERY  UNIT  │
└────────┬────────┘               │    └──────────────┬───────────┘
         ↓                        │                   │
┌─────────────────┐  4            │                   │
│ EXTRACTION AND  │←──────────────┼───────────────────┘
│ DISCHARGE UNIT  │
└────────┬────────┘
         ↓
┌─────────────────┐
│   AMINO ACID    │
│    ANALYZER     │
└─────────────────┘
```

# FIG. 2

# FIG. 3

# FIG. 4 A

# FIG. 4 B

# FIG. 4C

# FIG. 5

FIG.6A

## FIG.6B

EP 0 388 224 A2

# FIG.6C

EP 0 388 224 A2

# FIG.6D

EP 0 388 224 A2

FIG. 7

FIG. 8

FIG. 9

FIG. 10

FIG. 11

FIG. 12

# FIG. 13

EP 0 388 224 A2

# FIG.14

```
                    ┌─────────────────────┐  ╭101
                    │  DISPENSING UNIT     │ ╱
                    └─────────────────────┘
                              │
                    ┌─────────────────────┐  ╭102
                    │  TRANSFER    UNIT    │ ╱
                    └─────────────────────┘
                              │
                    ┌─────────────────────┐  ╭103
                    │  REACTION UNIT       │ ╱─────────────────┐
                    └─────────────────────┘                    │
                                                               │
         102╮      ┌─────────────────────┐      ┌────────────────────────────┐ ╭106
            ╲      │  TRANSFER    UNIT    │      │  FLUID DELIVERY    UNIT     │╱
                   └─────────────────────┘      └────────────────────────────┘
  104   ┌──────────────────┐                              │
   ╮    │  COOLING UNIT    │                              │
        └──────────────────┘                              │
  102   ┌──────────────────┐  ┌─────────────────────┐ ╭105│
   ╮    │  TRANSFER        │  │  EXTRACTION UNIT     │╱───┘
        │  UNIT            │  └─────────────────────┘
        └──────────────────┘            │
                           ┌─────────────────────┐  ╭180
                           │  AMINO ACID          │ ╱
                           │  ANALYZER UNIT       │
                           └─────────────────────┘
```

# FIG. 15A

# FIG. 15B

# FIG. 16

# FIG. 17

# FIG. 18

# FIG. 19

# FIG. 20

# FIG. 21

# FIG. 22

# FIG. 23

# FIG. 24A

# FIG. 24B

# FIG. 25

EP 0 388 224 A2

EP 0 388 224 A2

# FIG. 26

# FIG. 27

901 HYDROLYSIS DEVICE

| DISPENSING UNIT | 904 |

↓

TRANSFER UNIT — 908

↓

REACTION UNIT — 905

↓

TRANSFER UNIT — 908

↓

COOLING UNIT — 906

DELIVERING UNIT — 909

↓

TRANSFER UNIT — 908

↓

DISCHARGING UNIT — 907

CONTROL UNIT — 915

↓

CONNECTOR — 903

902 ANALYSIS DEVICE

INJECTION UNIT — 910

↓

CHROMATOGRAPH — 911

↓

REACTION UNIT — 912

↓

DETECTION UNIT — 913

↓

DATA PROCESSING UNIT — 914